# EUROPEAN PATENT APPLICATION

(11) **EP 4 132 021 A1**
(43) Date of publication of application: **08.02.2023**
(21) Application number: 21796192.9
(22) Date of filing: 01.04.2021
(51) Int. Cl.: H04W 4/06, H04W 4/50, H04W 28/24

(54) **METHOD AND DEVICE FOR TRANSMITTING DATA**

(30) Priority: 28.04.2020 CN 202010351868
(71) Applicant: Huawei Technologies Co., Ltd., Longgang Shenzhen, Guangdong 518129 (CN)
(72) Inventor: ZONG, Zaifeng, Shenzhen, Guangdong 518129 (CN); ZHU, Fenqin, Shenzhen, Guangdong 518129 (CN)
(74) Representative: Huawei European IPR
(86) International application number: PCT/CN2021/084809
(87) International publication number: WO 2021/218563

(57) **Abstract**

This application provides a data transmission method. The method includes: A application server sends a subscription request to a core network element, to subscribe to a notification indicating whether transmitting data of a first service to first user equipment in a multicast mode is supported, so that a transmission mode of the data of the first service can be flexibly selected based on a subscription result.

## Description

This application claims priority to Chinese Patent Application No. 202010351868.1, filed with the China National Intellectual Property Administration on April 28, 2020 and entitled "DATA TRANSMISSION METHOD AND APPARATUS", which is incorporated herein by reference in its entirety.

### TECHNICAL FIELD

This application relates to the communications field, and more specifically, to a data transmission method and apparatus.

### BACKGROUND

Virtual reality (virtual reality, VR) video services are bandwidth-hungry. If a VR video is played in a unicast mode, data of the video service can be simultaneously sent to only four user equipments in a single cell, consuming numerous resources. If a same VR video is watched on a plurality of user equipments in a same cell, the data of the video service may be sent in a 5th generation (5th generation, 5G) multicast mode. Therefore, how to flexibly select different service data transmission modes becomes an urgent problem to be resolved.

### SUMMARY

This application provides a data transmission method and apparatus, to flexibly select different service data transmission modes for service data transmission.

According to a first aspect, a data transmission method is provided. The data transmission method may be performed by an application server or a chip or a circuit disposed in the application server. This is not limited in this application.

The data transmission method includes: The application server sends a subscription request to a core network element, where the subscription request is for subscribing to a notification indicating whether sending data of a first service to first user equipment in a multicast mode is supported, and the application server serves the first service; the application server receives a first notification or a second notification, where the first notification notifies that sending the data of the first service to the first user equipment in the multicast mode is supported, and the second notification notifies that sending the data of the first service to the first user equipment in the multicast mode is not supported; and the application server determines, based on the first notification, to send multicast data of the first service to the first user equipment in the multicast mode; or the application server determines, based on the second notification, to send unicast data of the first service to the first user equipment in a unicast mode.

In the data transmission method provided in this embodiment of this application, the application server may subscribe to the notification indicating whether sending the data of the first service in the multicast mode is supported, to learn of, in a timely manner, a transmission mode supported by the data of the first service, so as to flexibly select the transmission mode of the data of the first service.

With reference to the first aspect, in some implementations of the first aspect, the method further includes: The application server determines a first cell accessed by the first user equipment and a quantity of user equipments in the first cell that receive the data of the first service, where the quantity of user equipments in the first cell that receive the data of the first service is for determining whether to send the data of the first service in the multicast mode.

Further, the application server may determine, based on the quantity of user equipments in the first cell accessed by the first user equipment that receive the data of the first service, whether to send the data of the first service in the multicast mode, so that the application server has a capability of determining whether to enable the multicast mode.

With reference to the first aspect, in some implementations of the first aspect, the method further includes: The application server sends first unicast service information and first multicast service information to the core network element, where the first multicast service information includes a multicast service identifier used for sending the data of the first service in the multicast mode, and the first unicast service information includes information about a first quality of service QoS requirement for sending the data of the first service in the unicast mode and flow description information for describing the unicast data of the first service.

In the data transmission method provided in this embodiment of this application, in a scenario in which the data of the first service is sent in the unicast mode or the multicast mode, the application server may send the first unicast service information and the first multicast service information to a core network device side, so that subsequently, the unicast mode can be quickly switched to the multicast mode for sending the data of the first service, to flexibly select different service data transmission modes for service data transmission.

With reference to the first aspect, in some implementations of the first aspect, that the application server sends a subscription request to a core network element includes: The application server sends a first message to the core network element, where the first message includes the subscription request, the first unicast service information, and the first multicast service information.

In the data transmission method provided in this embodiment of this application, the subscription request, the first unicast service information, and the first multicast service information may be sent via a same message, to reduce signaling overheads.

With reference to the first aspect, in some implementations of the first aspect, that the application server sends a subscription request to a core network element includes: The application server sends a first message to the core network element, where the first message includes the subscription request and the first unicast service information.

Further, the subscription request further includes at least one of the first multicast service information and assistance information.

In the data transmission method provided in this embodiment of this application, the subscription request and the first unicast service information may be sent via a same message, and the subscription request may carry the first multicast service information and/or the assistance information, to reduce signaling overheads.

With reference to the first aspect, in some implementations of the first aspect, the first multicast service information further includes information about a second QoS requirement for sending the data of the first service in the multicast mode.

In the data transmission method provided in this embodiment of this application, the first multicast service information may further include the information about the second QoS requirement, so that the core network element can learn of the information about the second QoS requirement.

With reference to the first aspect, in some implementations of the first aspect, when the application server determines to send the multicast data of the first service to the first user equipment in the multicast mode, the method further includes: The application server sends a third notification to the first user equipment; and/or the application server sends first information to the core network element, where the third notification indicates the first user equipment to receive the data of the first service in the multicast mode, and the first information indicates to send the data of the first service to the first user equipment in the multicast mode.

Alternatively, when the application server determines to send the unicast data of the first service to the first user equipment in the unicast mode, the method further includes: The application server sends a fourth notification to the first user equipment, where the fourth notification indicates the first user equipment to receive the data of the first service in the unicast mode.

In the data transmission method provided in this embodiment of this application, when the application server subscribes to the notification indicating whether sending the data of the first service in the multicast mode is supported, the application server may receive the first notification or the second notification from the core network device side, and determine, based on the received notification, whether to send the data of the first service in the multicast mode, to indicate, via the third notification or the fourth notification, the first user equipment to receive the data of the first service in the multicast mode or the unicast mode. Therefore, the first user equipment learns of, in a timely manner, a mode for receiving the data of the first service, to improve accuracy of a solution.

With reference to the first aspect, in some implementations of the first aspect, the method further includes: The application server sends second information to the core network element, where the second information indicates to delete the first unicast service information, or the second information indicates to stop sending the data of the first service to the first user equipment in the unicast mode.

For example, when the application server determines to send the data of the first service in the multicast mode, the application server may indicate, via the second information, to delete the first unicast service information corresponding to the first service, to delete a resource allocated for sending the data of the first service to the first user equipment in the unicast mode, so as to reduce resource overheads. Alternatively, when the application server may not delete the first unicast service information corresponding to the first service, the application server may send the second information, to delete a resource allocated for sending the data of the first service to the first user equipment in the unicast mode. In this manner, the core network element may retain the first unicast service information, so that when the transmission mode is subsequently switched to the unicast mode again for sending the data of the first service, the core network element does not need to obtain the first unicast service information again, to reduce signaling overheads.

With reference to the first aspect, in some implementations of the first aspect, the method further includes: The application server sends the first unicast service information to the core network element, where the first unicast service information is for allocating a resource for sending the data of the first service to the first user equipment in the unicast mode; or the application server sends third information to the core network element, where the third information indicates to send the data of the first service to the first user equipment in the unicast mode.

When determining to stop sending the data of the first service in the multicast mode, the application server may switch from the multicast mode to the unicast mode for sending the data of the first service. In this case, the application server may send the first unicast service information corresponding to the first service to the core network element, so that the core network element can transmit the data of the first service in the unicast mode. Alternatively, when the core network element has obtained the first unicast service information, the application server may indicate, via the third information, to transmit the data of the first service in the unicast mode. Different solutions for switching from the multicast mode to the unicast mode for sending the data of the first service are provided, to further improve flexibility of the data transmission solution in this application.

With reference to the first aspect, in some implementations of the first aspect, the subscription request includes assistance information, and the assistance information is for assisting in determining whether to send the data of the first service to the first user equipment in the multicast mode.

In the data transmission method provided in this embodiment of this application, the application server may send the assistance information to the core network element, and the core network element delivers the assistance information to the core network element and/or an access network device, to assist the core network element and/or the access network device in determining whether to send the data of the first service to the first user equipment in the multicast mode, so as to improve accuracy of the solution.

With reference to the first aspect, in some implementations of the first aspect, the method further includes: The application server sends multicast information of the first service to the first user equipment, where the multicast information of the first service includes multicast address information.

In the technical solution provided in this application, to enable the first user equipment to learn that the data of the first service can be transmitted in the multicast mode, the application server may send the multicast information of the first service to the first user equipment, so that the first user equipment can learn of different transmission modes of the data of the first service.

According to a second aspect, a data transmission method is provided. The data transmission method may be performed by a policy control network element or a chip or a circuit disposed in the policy control network element. This is not limited in this application.

The data transmission method includes:
The policy control network element receives a first message, where the first message includes first unicast service information and first multicast service information, the first unicast service information includes information about a first quality of service QoS requirement for sending data of a first service in a unicast mode and flow description information for describing unicast data of the first service, and the first multicast service information includes a multicast service identifier used for sending the data of the first service in a multicast mode; and the policy control network element sends, to a session management network element, a first policy and charging control PCC rule used for sending the data of the first service in the unicast mode, where the first PCC rule includes the multicast service identifier.

In the data transmission method provided in this embodiment of this application, the policy control network element learns from the received first message that an application server supports sending the data of the first service in the multicast mode. When the policy control network element learns that the application server supports sending the data of the first service in the multicast mode, the policy control network element notifies, via the first PCC rule, the session management network element that the application server supports sending the data of the first service in the multicast mode. Therefore, the policy control network element and the session management network element on a core network device side learn that the application server supports sending the data of the first service in the multicast mode, so that subsequently, the unicast mode can be quickly switched to the multicast mode for sending the data of the first service, to flexibly select different service data transmission modes for service data transmission.

With reference to the second aspect, in some implementations of the second aspect, the first message further includes a subscription request, where the subscription request is for subscribing to a notification indicating whether sending the data of the first service to first user equipment in the multicast mode is supported, and the first PCC rule includes the subscription request.

In the data transmission method provided in this embodiment of this application, the subscription request, the first unicast service information, and the first multicast service information may be sent via a same message, to reduce signaling overheads.

With reference to the second aspect, in some implementations of the second aspect, the first multicast service information further includes information about a second QoS requirement for sending the data of the first service in the multicast mode.

In the data transmission method provided in this embodiment of this application, the first multicast service information may further include the information about the second QoS requirement, so that the policy control network element can learn of the information about the second QoS requirement, and can further formulate a second PCC rule used for sending the data of the first service in the multicast mode.

According to a third aspect, a data transmission method is provided. The data transmission method may be performed by a session management network element or a chip or a circuit disposed in the session management network element. This is not limited in this application.

The data transmission method includes:
The session management network element receives a subscription request, where the subscription request is for subscribing to a notification indicating whether sending data of a first service to first user equipment in a multicast mode is supported, and an application server serves the first service; the session management network element determines whether sending the data of the first service to the first user equipment in the multicast mode is supported; and the session management network element sends a first notification or a second notification to the application server, where the first notification notifies that sending the data of the first service to the first user equipment in the multicast mode is supported, and the second notification notifies that sending the data of the first service to the first user equipment in the multicast mode is not supported.

In the data transmission method provided in this embodiment of this application, when the session management network element learns whether sending the data of the first service in the multicast mode is supported, the session management network element notifies the application server via the first notification or the second notification, so that the application server can learn whether sending the data of the first service in the multicast mode is supported. Therefore, subsequently, a unicast mode can be quickly switched from to the multicast mode for sending the data of the first service, to flexibly select different service data transmission modes for service data transmission.

With reference to the third aspect, in some implementations of the third aspect, that the session management network element determines whether sending the data of the first service to the first user equipment in the multicast mode is supported includes: The session management network element determines whether an access network device supports sending the data of the first service to the first user equipment in the multicast mode, where the first user equipment accesses a network through the access network device; and/or the session management network element determines whether the first user equipment supports receiving the data of the first service in the multicast mode.

In the data transmission method provided in this embodiment of this application, the session management network element may determine that the access network device supports sending the data of the first service in the multicast mode, and/or determine that the first user equipment supports receiving the data of the first service in the multicast mode, to determine that a 5G network supports sending the data of the first service to the first user equipment in the multicast mode, so as to improve flexibility of a solution.

With reference to the third aspect, in some implementations of the third aspect, the method further includes: The session management network element obtains assistance information, where the assistance information is for assisting in determining whether to send the data of the first service to the first user equipment in the multicast mode; and the session management network element sends the assistance information to the access network device.

In the data transmission method provided in this embodiment of this application, the session management network element may send the assistance information to the access network device, to assist the access network device in determining whether to send the data of the first service to the first user equipment in the multicast mode, so as to improve accuracy of the solution.

With reference to the third aspect, in some implementations of the third aspect, the assistance information includes one or more of the following information: a bandwidth required for sending the data of the first service in the multicast mode, a bandwidth required for sending the data of the first service in the unicast mode, a first quality of service QoS requirement for sending the data of the first service in the unicast mode, and a second QoS requirement for sending the data of the first service in the multicast mode.

The foregoing assistance information may be specifically represented in a plurality of forms, to improve the flexibility of the solution.

With reference to the third aspect, in some implementations of the third aspect, the subscription request includes the assistance information.

In the data transmission method provided in this embodiment of this application, the session management network element may obtain the assistance information in different manners, to improve the flexibility of the solution.

With reference to the third aspect, in some implementations of the third aspect, the method further includes: The session management network element receives the information about the first QoS requirement and/or the information about the second QoS requirement from a policy control network element.

Further, the session management network element may receive the information about the first QoS requirement and/or the information about the second QoS requirement from the policy control network element, to determine at least one first QoS flow required for sending the data of the first service in the unicast mode, and/or determine at least one second QoS flow required for sending the data of the first service in the multicast mode. Information about the first QoS flow and information about the second QoS flow may be sent to the access network device, so that the access network device can learn of the QoS flow required for sending the data of the first service in the unicast mode or the multicast mode. This helps subsequently transmit the data of the first service in the unicast mode or the multicast mode.

With reference to the third aspect, in some implementations of the third aspect, the method further includes: The session management network element receives a fifth notification from the access network device, where the fifth notification notifies that the access network device supports sending the data of the first service to the first user equipment in the multicast mode. That the session management network element determines whether sending the data of the first service to the first user equipment in the multicast mode is supported includes: The session management network element determines, based on the fifth notification, that sending the data of the first service to the first user equipment in the multicast mode is supported.

Alternatively, the method further includes: The session management network element receives a sixth notification from the access network device, where the sixth notification notifies that the access network device does not support sending the data of the first service to the first user equipment in the multicast mode. That the session management network element determines whether sending the data of the first service to the first user equipment in the multicast mode is supported includes: The session management network element determines, based on the sixth notification, that sending the data of the first service to the first user equipment in the multicast mode is not supported.

Specifically, the session management network element may receive the fifth notification or the sixth notification from the access network device, and determine whether to indicate the application server to send the data of the first service in the multicast mode, so that the application server learns of, in a timely manner, a mode for sending the data of the first service, to improve the accuracy of the solution.

With reference to the third aspect, in some implementations of the third aspect, the method further includes: The session management network element sends fifth information to the access network device, where the fifth information enables the access network device to send the fifth notification or the sixth notification to the session management network element, the fifth notification notifies that sending the data of the first service in the multicast mode is supported, and the sixth notification notifies that sending the data of the first service in the multicast mode is not supported.

In the data transmission method provided in this embodiment of this application, the session management network element may enable, via the fifth information, the access network device to send, to the session management network element, the notification indicating whether sending the data of the first service in the multicast mode is supported, so that the session management network element can learn, from the access network device in a timely manner, whether sending the data of the first service in the multicast mode is supported, to improve timeliness of the solution.

With reference to the third aspect, in some implementations of the third aspect, the method further includes: The session management network element receives first information; or the session management network element receives seventh information from the first user equipment, where the first information and the seventh information indicate to send the data of the first service to the first user equipment in the multicast mode; and the session management network element sends eighth information to the access network device, where the eighth information enables the access network device to send the data of the first service to the first user equipment in the multicast mode.

In the data transmission method provided in this embodiment of this application, when the session management network element determines to send the data of the first service to the first user equipment in the multicast mode, the session management network element may enable, via the eighth information, the access network device to send the data of the first service to the first user equipment in the multicast mode, to enable the multicast transmission mode of the data of the first service.

With reference to the third aspect, in some implementations of the third aspect, the method further includes: The session management network element sends fourth information to the access network device, where the fourth information indicates the access network device to send the data of the first service in a point-to-multipoint PTM mode.

In the data transmission method provided in this embodiment of this application, the session management network element may indicate, via the fourth information, the access network device to send the data of the first service in the PTM mode.

According to a fourth aspect, a data transmission method is provided. The data transmission method may be performed by an access network device or a chip or a circuit disposed in the access network device. This is not limited in this application.

The data transmission method includes:
The access network device receives fifth information from a session management network element, where the fifth information enables the access network device to send a fifth notification or a sixth notification to the session management network element, the fifth notification notifies that the access network device supports sending data of a first service to first user equipment in a multicast mode, and the sixth notification notifies that the access network device does not support sending the data of the first service to the first user equipment in the multicast mode; and the access network device sends the fifth notification to the session management network element in response to that the access network device determines to support sending the data of the first service to the first user equipment in the multicast mode; or the access network device sends the sixth notification to the session management network element in response to that the access network device determines not to support sending the data of the first service to the first user equipment in the multicast mode.

In the data transmission method provided in this embodiment of this application, the session management network element may enable, via the fifth information, the access network device to send, to the session management network element, a notification indicating whether sending the data of the first service in the multicast mode is supported, so that the session management network element can learn, from the access network device in a timely manner, whether sending the data of the first service in the multicast mode is supported, to improve timeliness of a solution.

With reference to the fourth aspect, in some implementations of the fourth aspect, the method further includes: The access network device obtains assistance information, where the assistance information is for assisting in determining whether to send the data of the first service in the multicast mode.

In the data transmission method provided in this embodiment of this application, the session management network element may send the assistance information to the access network device, to assist the access network device in determining whether to send the data of the first service to the first user equipment in the multicast mode, so as to improve accuracy of the solution.

With reference to the fourth aspect, in some implementations of the fourth aspect, that the access network device obtains assistance information includes: The access network device obtains the assistance information from the session management network element; or the access network device receives information about a first quality of service QoS flow required for sending the data of the first service in a unicast mode and/or information about a second QoS flow required for sending the data of the first service in the multicast mode, and the access network device determines the assistance information based on the information about the first QoS flow and/or the information about the second QoS flow.

In the data transmission method provided in this embodiment of this application, the access network device may obtain the assistance information in different manners, to improve flexibility of the solution.

With reference to the fourth aspect, in some implementations of the fourth aspect, the method further includes:

The access network device receives fourth information from the session management network element, where the fourth information indicates the access network device to send the data of the first service in a point-to-multipoint PTM mode.

In the data transmission method provided in this embodiment of this application, the session management network element may indicate, via the fourth information, the access network device to send the data of the first service in the PTM mode.

With reference to the fourth aspect, in some implementations of the fourth aspect, the method further includes: The access network device receives eighth information from the session management network element, where the eighth information enables the access network device to send the data of the first service to the first user equipment in the multicast mode.

When the session management network element determines to send the data of the first service to the first user equipment in the multicast mode, the session management network element may enable, via the eighth information, the access network device to send the data of the first service to the first user equipment in the multicast mode, to enable the multicast transmission mode of the data of the first service.

According to a fifth aspect, a data transmission apparatus is provided. The data transmission apparatus includes a processor, configured to implement a function of the application server in the method described in the first aspect.

The data transmission apparatus includes:
a sending unit, configured to send a subscription request to a core network element, where the subscription request is for subscribing to a notification indicating whether sending data of a first service to first user equipment in a multicast mode is supported, and the application server serves the first service;
a receiving unit, configured to receive a first notification or a second notification from the core network element, where the first notification notifies that sending the data of the first service to the first user equipment in the multicast mode is supported, and the second notification notifies that sending the data of the first service to the first user equipment in the multicast mode is not supported; and
a processing unit, configured to: determine, based on the first notification, to send multicast data of the first service to the first user equipment in the multicast mode; or
determine, based on the second notification, to send unicast data of the first service to the first user equipment in a unicast mode.

With reference to the fifth aspect, in some implementations of the fifth aspect, the processing unit is further configured to determine a first cell accessed by the first user equipment and a quantity of user equipments in the first cell that receive the data of the first service, where the quantity of user equipments in the first cell that receive the data of the first service is for determining whether to send the data of the first service in the multicast mode.

With reference to the fifth aspect, in some implementations of the fifth aspect, the sending unit is further configured to send first unicast service information and first multicast service information to the core network element, where the first multicast service information includes a multicast service identifier used for sending the data of the first service in the multicast mode, and the first unicast service information includes information about a first quality of service QoS requirement for sending the data of the first service in the unicast mode and flow description information for describing the unicast data of the first service.

With reference to the fifth aspect, in some implementations of the fifth aspect, that the sending unit sends the subscription request to the core network element includes:

The sending unit sends a first message to the core network element, where the first message includes the subscription request, the first unicast service information, and the first multicast service information.

With reference to the fifth aspect, in some implementations of the fifth aspect, the first multicast service information further includes:
information about a second QoS requirement for sending the data of the first service in the multicast mode.

With reference to the fifth aspect, in some implementations of the fifth aspect, when the processing unit determines to send the multicast data of the first service to the first user equipment in the multicast mode, the sending unit is further configured to send a third notification to the first user equipment; and/or
the sending unit is further configured to send first information to the core network element.

The third notification indicates the first user equipment to receive the data of the first service in the multicast mode, and the first information indicates to send the data of the first service to the first user equipment in the multicast mode.

With reference to the fifth aspect, in some implementations of the fifth aspect, the sending unit is further configured to send second information to the core network element, where the second information indicates to delete the first unicast service information; or
the second information indicates to stop sending the data of the first service to the first user equipment in the unicast mode.

With reference to the fifth aspect, in some implementations of the fifth aspect, when the processing unit determines to send the unicast data of the first service to the first user equipment in the unicast mode, the sending unit is further configured to send a fourth notification to the first user equipment, where the fourth notification indicates the first user equipment to receive the data of the first service in the unicast mode.

With reference to the fifth aspect, in some implementations of the fifth aspect, the sending unit is further configured to send the first unicast service information to the core network element, where the first unicast service information is for allocating a resource for sending the data of the first service to the first user equipment in the unicast mode; or
the sending unit is further configured to send third information to the core network element, where the third information enables the core network element to send the data of the first service to the first user equipment in the unicast mode.

With reference to the fifth aspect, in some implementations of the fifth aspect, the subscription request includes assistance information, and the assistance information is for assisting in determining whether to send the data of the first service to the first user equipment in the multicast mode.

With reference to the fifth aspect, in some implementations of the fifth aspect, the sending unit is further configured to send multicast information of the first service to the first user equipment, where the multicast information of the first service includes multicast address information.

Optionally, the data transmission apparatus may further include a memory. The memory is coupled to the processor, and the processor is configured to implement the function of the application server in the method described in the first aspect. In a possible design, the memory is configured to store program instructions and data. The memory is coupled to the processor, and the processor may invoke and execute the program instructions stored in the memory, to implement the function of the application server in the method described in the first aspect.

Optionally, the data transmission apparatus may further include a communication interface, and the data transmission apparatus communicates with another device through the communication interface. When the data transmission apparatus is user equipment, the communication interface may be a transceiver, an input/output interface, a circuit, or the like.

In a possible design, the data transmission apparatus includes the processor and the communication interface.

The processor is configured to run a computer program, to enable the data transmission apparatus to implement any method described in the first aspect.

The processor communicates with an external device through the communication interface.

It may be understood that the external device may be an object other than the processor or an object other than the apparatus.

In another possible design, the data transmission apparatus is a chip or a chip system. The communication interface may be an input/output interface, an interface circuit, an output circuit, an input circuit, a pin, a related circuit, or the like in the chip or the chip system. The processor may alternatively be embodied as a processing circuit or a logic circuit.

According to a sixth aspect, a data transmission apparatus is provided. The data transmission apparatus includes a processor, configured to implement a function of the policy control network element in the method described in the second aspect.

The data transmission apparatus includes:
a receiving unit, configured to receive a first message, where the first message includes first unicast service information and first multicast service information, the first unicast service information includes information about a first quality of service QoS requirement for sending data of a first service in a unicast mode and flow description information for describing unicast data of the first service, and the first multicast service information includes a multicast service identifier used for sending the data of the first service in a multicast mode; and
a sending unit, configured to send, to a session management network element, a first policy and charging control PCC rule used for sending the data of the first service in the unicast mode, where the first PCC rule includes the multicast service identifier.

With reference to the sixth aspect, in some implementations of the sixth aspect, the first message further includes a subscription request, where the subscription request is for subscribing to a notification indicating whether sending the data of the first service to first user equipment in the multicast mode is supported, and the first PCC rule includes the subscription request.

With reference to the sixth aspect, in some implementations of the sixth aspect, the first multicast service information further includes information about a second QoS requirement for sending the data of the first service in the multicast mode.

Optionally, the data transmission apparatus may further include a memory. The memory is coupled to the processor, and the processor is configured to implement the function of the policy control network element in the method described in the second aspect.

In a possible design, the memory is configured to store program instructions and data. The memory is coupled to the processor, and the processor may invoke and execute the program instructions stored in the memory, to implement the function of the policy control network element in the method described in the second aspect.

Optionally, the data transmission apparatus may further include a communication interface, and the data transmission apparatus communicates with another device through the communication interface. When the data transmission apparatus is the policy control network element, the communication interface may be a transceiver, an input/output interface, a circuit, or the like.

In a possible design, the data transmission apparatus includes the processor and the communication interface.

The processor communicates with an external device through the communication interface.

The processor is configured to run a computer program, to enable the data transmission apparatus to implement any method described in the second aspect.

It may be understood that the external device may be an object other than the processor or an object other than the apparatus.

In another possible design, the data transmission apparatus is a chip or a chip system. The communication interface may be an input/output interface, an interface circuit, an output circuit, an input circuit, a pin, a related circuit, or the like in the chip or the chip system. The processor may alternatively be embodied as a processing circuit or a logic circuit.

According to a seventh aspect, a data transmission apparatus is provided. The data transmission apparatus includes a processor, configured to implement a function of the session management network element in the method described in the third aspect.

The data transmission apparatus includes:
a receiving unit, configured to receive a subscription request, where the subscription request is for subscribing to a notification indicating whether sending data of a first service to first user equipment in a multicast mode is supported, and an application server serves the first service;
a processing unit, configured to determine whether sending the data of the first service to the first user equipment in the multicast mode is supported; and
a sending unit, configured to send a first notification or a second notification to the application server, where the first notification notifies that sending the data of the first service to the first user equipment in the multicast mode is supported, and the second notification notifies that sending the data of the first service to the first user equipment in the multicast mode is not supported.

With reference to the seventh aspect, in some implementations of the seventh aspect, that the processing unit determines whether sending the data of the first service to the first user equipment in the multicast mode is supported includes:

The processing unit determines whether an access network device supports sending the data of the first service to the first user equipment in the multicast mode, where the first user equipment accesses a network through the access network device; and/or
the processing unit determines whether the first user equipment supports receiving the data of the first service in the multicast mode.

With reference to the seventh aspect, in some implementations of the seventh aspect, the receiving unit is further configured to obtain assistance information, where the assistance information is for assisting in determining whether to send the data of the first service to the first user equipment in the multicast mode.

The sending unit is further configured to send the assistance information to the access network device.

With reference to the seventh aspect, in some implementations of the seventh aspect, the assistance information includes one or more of the following information: a bandwidth required for sending the data of the first service in the multicast mode, a bandwidth required for sending the data of the first service in a unicast mode, a first quality of service QoS requirement for sending the data of the first service in the unicast mode, and a second QoS requirement for sending the data of the first service in the multicast mode.

With reference to the seventh aspect, in some implementations of the seventh aspect, the subscription request includes the assistance information.

With reference to the seventh aspect, in some implementations of the seventh aspect, the receiving unit is further configured to receive the information about the first QoS requirement and/or the information about the second QoS requirement from a policy control network element.

With reference to the seventh aspect, in some implementations of the seventh aspect, the sending unit is further configured to send fourth information to the access network device, where the fourth information indicates the access network device to send the data of the first service in a point-to-multipoint PTM mode.

With reference to the seventh aspect, in some implementations of the seventh aspect, the receiving unit is further configured to receive a fifth notification from the access network device, where the fifth notification notifies that the access network device supports sending the data of the first service to the first user equipment in the multicast mode.

That the processing unit determines whether sending the data of the first service to the first user equipment in the multicast mode is supported includes:

The processing unit determines, based on the fifth notification, that sending the data of the first service to the first user equipment in the multicast mode is supported.

With reference to the seventh aspect, in some implementations of the seventh aspect, the receiving unit is further configured to receive a sixth notification from the access network device, where the sixth notification notifies that the access network device does not support sending the data of the first service to the first user equipment in the multicast mode.

That the processing unit determines whether sending the data of the first service to the first user equipment in the multicast mode is supported includes:

The processing unit determines, based on the sixth notification, that sending the data of the first service to the first user equipment in the multicast mode is not supported.

With reference to the seventh aspect, in some implementations of the seventh aspect, the sending unit is further configured to send fifth information to the access network device, where the fifth information enables the access network device to send the fifth notification or the sixth notification to the session management network element.

The fifth notification notifies that sending the data of the first service in the multicast mode is supported, and the sixth notification notifies that sending the data of the first service in the multicast mode is not supported.

With reference to the seventh aspect, in some implementations of the seventh aspect, the receiving unit is further configured to receive first information; or
the receiving unit is further configured to receive seventh information from the first user equipment, where the first information and the seventh information indicate to send the data of the first service to the first user equipment in the multicast mode.

The sending unit is further configured to send eighth information to the access network device, where the eighth information enables the access network device to send the data of the first service to the first user equipment in the multicast mode.

Optionally, the data transmission apparatus may further include a memory. The memory is coupled to the processor, and the processor is configured to implement the function of the session management network element in the method described in the third aspect.

In a possible design, the memory is configured to store program instructions and data. The memory is coupled to the processor, and the processor may invoke and execute the program instructions stored in the memory, to implement the function of the session management network element in the method described in the third aspect.

Optionally, the data transmission apparatus may further include a communication interface, and the data transmission apparatus communicates with another device through the communication interface. When the data transmission apparatus is the session management network element, the communication interface may be a transceiver, an input/output interface, a circuit, or the like.

In a possible design, the data transmission apparatus includes the processor and the communication interface.

The processor communicates with an external device through the communication interface.

The processor is configured to run a computer program, to enable the data transmission apparatus to implement any method described in the third aspect.

It may be understood that the external device may be an object other than the processor or an object other than the apparatus.

In another possible design, the data transmission apparatus is a chip or a chip system. The communication interface may be an input/output interface, an interface circuit, an output circuit, an input circuit, a pin, a related circuit, or the like in the chip or the chip system. The processor may alternatively be embodied as a processing circuit or a logic circuit.

According to an eighth aspect, a data transmission apparatus is provided. The data transmission apparatus includes a processor, configured to implement a function of the access network device in the method described in the fourth aspect.

The data transmission apparatus includes:
a receiving unit, configured to receive fifth information from a session management network element, where the fifth information enables the access network device to send a fifth notification or a sixth notification to the session management network element; and
the fifth notification notifies that the access network device supports sending data of a first service to first user equipment in a multicast mode, and the sixth notification notifies that the access network device does not support sending the data of the first service to the first user equipment in the multicast mode; and
a sending unit, configured to: send, for the access network device, the fifth notification to the session management network element in response to that the access network device determines to support sending the data of the first service to the first user equipment in the multicast mode; or
send, for the access network device, the sixth notification to the session management network element in response to that the access network device determines not to support sending the data of the first service to the first user equipment in the multicast mode.

With reference to the eighth aspect, in some implementations of the eighth aspect, the receiving unit is further configured to obtain assistance information, where the assistance information is for assisting in determining whether to send the data of the first service in the multicast mode.

With reference to the eighth aspect, in some implementations of the eighth aspect, that the receiving unit obtains the assistance information includes:

The receiving unit obtains the assistance information from the session management network element; or
the receiving unit receives information about a first quality of service QoS flow required for sending the data of the first service in a unicast mode and/or information about a second QoS flow required for sending the data of the first service in the multicast mode.

The apparatus further includes:
a processing unit, configured to determine the assistance information based on the information about the first QoS flow and/or the information about the second QoS flow.

With reference to the eighth aspect, in some implementations of the eighth aspect, the receiving unit is further configured to receive fourth information from the session management network element, where the fourth information indicates the access network device to send the data of the first service in a point-to-multipoint PTM mode.

With reference to the eighth aspect, in some implementations of the eighth aspect, the receiving unit is further configured to receive eighth information from the session management network element, where the eighth information enables the access network device to send the data of the first service to the first user equipment in the multicast mode.

Optionally, the data transmission apparatus may further include a memory. The memory is coupled to the processor, and the processor is configured to implement the function of the access network device in the method described in the fourth aspect.

In a possible design, the memory is configured to store program instructions and data. The memory is coupled to the processor, and the processor may invoke and execute the program instructions stored in the memory, to implement the function of the access network device in the method described in the fourth aspect.

Optionally, the data transmission apparatus may further include a communication interface, and the data transmission apparatus communicates with another device through the communication interface. When the data transmission apparatus is the access network device, the communication interface may be a transceiver, an input/output interface, a circuit, or the like.

In a possible design, the data transmission apparatus includes the processor and the communication interface.

The processor communicates with an external device through the communication interface.

The processor is configured to run a computer program, to enable the data transmission apparatus to implement any method described in the fourth aspect.

It may be understood that the external device may be an object other than the processor or an object other than the apparatus.

In another possible design, the data transmission apparatus is a chip or a chip system. The communication interface may be an input/output interface, an interface circuit, an output circuit, an input circuit, a pin, a related circuit, or the like in the chip or the chip system. The processor may alternatively be embodied as a processing circuit or a logic circuit.

According to a ninth aspect, this application provides a computer-readable storage medium. The computer-readable storage medium stores instructions. When the instructions are run on a computer, the computer is enabled to perform the methods according to the foregoing aspects.

According to a tenth aspect, this application provides a computer program product including instructions. When the computer program product runs on a computer, the computer is enabled to perform the methods according to the foregoing aspects.

According to an eleventh aspect, a communication system is provided. The communication system includes the data transmission apparatus shown in the sixth aspect, the data transmission apparatus shown in the seventh aspect, and the data transmission apparatus shown in the eighth aspect.

According to a twelfth aspect, a communication system is provided. The communication system includes the data transmission apparatus shown in the fifth aspect, the data transmission apparatus shown in the sixth aspect, the data transmission apparatus shown in the seventh aspect, and the data transmission apparatus shown in the eighth aspect.

According to a thirteenth aspect, a chip apparatus is provided. The chip apparatus includes a processing circuit. The processing circuit is configured to invoke a program from a memory and run the program, to enable a communication device on which the chip apparatus is installed to perform the method according to any one of the possible implementations of the first aspect to the fourth aspect.

According to the data transmission apparatus, the communication system, the computer-readable storage medium, the computer program product, and the chip apparatus that are provided in this application, the notification indicating whether sending the data of the first service in the multicast mode is supported is subscribed to, to flexibly select different service data transmission modes for service data transmission.

### BRIEF DESCRIPTION OF DRAWINGS

FIG. 1 is a schematic diagram of a network architecture to which an embodiment of this application is applicable;
FIG. 2 is a schematic diagram of a network architecture to which a method for sending data of a service in a multicast mode is applicable;
FIG. 3A and FIG. 3B are a schematic flowchart of a data transmission method according to an embodiment of this application;
FIG. 4 is a schematic flowchart of another data transmission method according to an embodiment of this application;
FIG. 5 is a schematic flowchart of still another data transmission method according to an embodiment of this application;
FIG. 6 is a schematic block diagram of a data transmission apparatus 600 according to an embodiment of this application;
FIG. 7 is a schematic block diagram of an application server 700 according to an embodiment of this application;
FIG. 8 is a schematic block diagram of another data transmission apparatus 800 according to an embodiment of this application;
FIG. 9 is a schematic block diagram of a policy control network element 900 according to an embodiment of this application;
FIG. 10 is a schematic block diagram of still another data transmission apparatus 1000 according to an embodiment of this application;
FIG. 11 is a schematic block diagram of a session management network element 1100 according to an embodiment of this application;
FIG. 12 is a schematic block diagram of yet another data transmission apparatus 1200 according to an embodiment of this application; and
FIG. 13 is a schematic block diagram of an access network device 1300 according to an embodiment of this application.

### DESCRIPTION OF EMBODIMENTS

The following describes technical solutions of this application with reference to accompanying drawings.

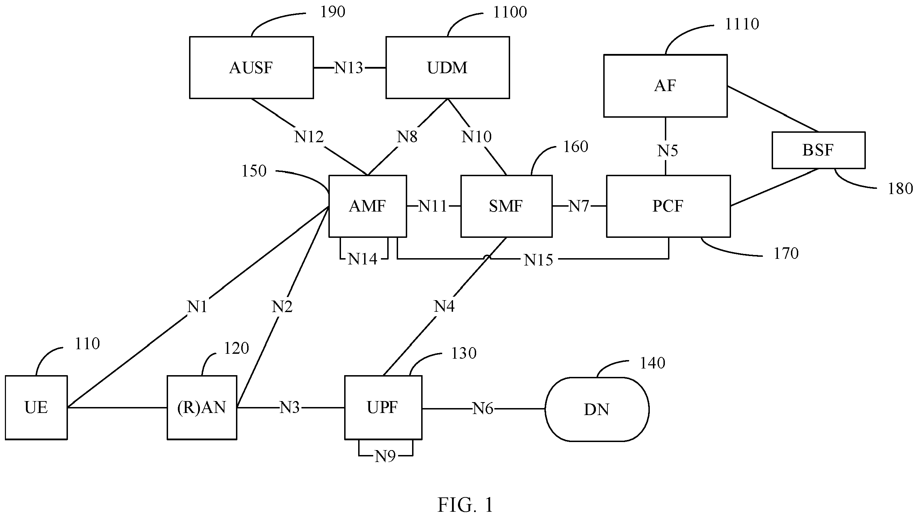

FIG. 1 is a schematic diagram of a network architecture to which an embodiment of this application is applicable. The following separately describes each part in the network architecture shown in FIG. 1.
1. User equipment (user equipment, UE) 110 may include various handheld devices having a wireless communication function, vehicle-mounted devices, wearable devices, computing devices, or other processing devices connected to a wireless modem, and terminals in various forms, for example, a mobile station (mobile station, MS), a terminal (terminal), or a soft client. For example, the UE 110 may be a water meter, an electricity meter, or a sensor.

For example, the user equipment in embodiments of this application may be an access terminal, a subscriber unit, a subscriber station, a mobile station, a relay station, a remote station, a remote terminal, a mobile device, a user terminal (user terminal), terminal equipment (terminal equipment), a wireless communication device, a user agent, a user apparatus, or the like. The user equipment may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, user equipment in a 5G network, user equipment in a future evolved public land mobile network (public land mobile network, PLMN), user equipment in a future internet of vehicles, or the like. This is not limited in embodiments of this application.

By way of example but not limitation, in embodiments of this application, the wearable device may also be referred to as a wearable intelligent device, and is a generic term for wearable devices such as glasses, gloves, watches, clothes, and shoes that are developed based on intelligent design of daily wearing by using wearable technologies. The wearable device is a portable device that can be directly worn on the body or integrated into clothes or an accessory of a user. The wearable device is not only a hardware device, but also implements a powerful function through software support, data exchange, and cloud interaction. Generalized wearable intelligent devices include full-featured and large-size devices that can implement complete or partial functions without depending on smartphones, such as smart watches or smart glasses, and devices that focus on only one type of application function and need to work with other devices such as smartphones, such as various smart bands or smart jewelry for monitoring physical signs.

In addition, the user equipment in embodiments of this application may alternatively be user equipment in internet of things (internet of Things, loT) system. IoT is an important part of development of future information technologies. A main technical feature of the IoT is to connect an object to a network by using a communication technology, to implement an intelligent network of human-machine interconnection and thing-thing interconnection. In embodiments of this application, an IoT technology may implement massive connections, deep coverage, and terminal power saving by using, for example, a narrowband (narrowband, NB) technology. In addition, in embodiments of this application, the user equipment may further include sensors such as a smart printer, a train detector, and a gas station. Main functions include collecting data (some user equipments), receiving control information and downlink data of an access network device, sending an electromagnetic wave, and transmitting uplink data to the access network device.

2. A (radio) access network (radio access network, (R)AN) device 120 is configured to provide a network access function for authorized user equipments in a specific area, and can use transmission tunnels with different quality based on levels, service requirements, and the like of the user equipments.

The (R)AN can manage a radio resource and provide an access service for user equipment, to forward a control signal and user equipment data between the user equipment and a core network. The (R)AN may also be understood as a base station in a conventional network.

For example, the access network device in embodiments of this application may be any communication device that has a wireless transceiver function and that is configured to communicate with the user equipment. The access network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (home evolved NodeB, HeNB, or home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like. Alternatively, the access network device may be a gNB or a transmission point (TRP or TP) in a 5G system such as an NR system, may be one antenna panel or a group of antenna panels (including a plurality of antenna panels) of a base station in a 5G system, or may be a network node, for example, a baseband unit (BBU) or a distributed unit (distributed unit, DU), that constitutes a gNB or a transmission point.

In some deployments, the gNB may include a centralized unit (centralized unit, CU) and the DU. The gNB may further include an active antenna unit (active antenna unit, AAU). The CU implements some functions of the gNB, and the DU implements some functions of the gNB. For example, the CU is responsible for processing a non-real-time protocol and service, to implement functions of a radio resource control (radio resource control, RRC) layer and a packet data convergence protocol (packet data convergence protocol, PDCP) layer. The DU is responsible for processing a physical layer protocol and a real-time service, to implement functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the access network device may be a device including one or more of a CU node, a DU node, and an AAU node. In addition, the CU may be classified as an access network device in an access network (radio access network, RAN), or may be classified as an access network device in a core network (core network, CN). This is not limited in this application.

3. A user plane network element 130 is configured to perform packet routing and forwarding, quality of service (quality of service, QoS) processing of user plane data, and the like.

In a 5G communication system, the user plane network element may be a user plane function (user plane function, UPF) network element. In a future communication system, the user plane network element may still be the UPF network element, or may have another name. This is not limited in this application.

4. A data network element 140 is configured to provide a network for data transmission.

In the 5G communication system, the data network element may be a data network (data network, DN) network element. In the future communication system, the data network element may still be the DN network element, or may have another name. This is not limited in this application.

5. An access management network element 150 is mainly configured to perform mobility management, access management, and the like, and may be configured to implement functions, for example, lawful interception and access authorization/authentication, other than session management in functions of a mobility management entity (mobility management entity, MME).

In the 5G communication system, the access management network element may be an access and mobility management function (access and mobility management function, AMF) network element. In the future communication system, the access management network element may still be the AMF network element, or may have another name. This is not limited in this application.

6. A session management network element 160 is mainly configured to manage a session, assign and manage an internet protocol (internet protocol, IP) address of a terminal device, select an endpoint that can manage a user plane function interface and a policy control and charging function interface, notify downlink data, and the like.

In the 5G communication system, the session management network element may be a session management function (session management function, SMF) network element. In the future communication system, the session management network element may still be the SMF network element, or may have another name. This is not limited in this application.

7. A policy control network element 170 is configured to guide a unified policy framework of network behavior, provide policy rule information for a control plane function network element (for example, the AMF network element or the SMF network element), and the like.

In a 4G communication system, the policy control network element may be a policy and charging rules function (policy and charging rules function, PCRF) network element. In the 5G communication system, the policy control network element may be the policy control function (policy control function, PCF) network element. In the future communication system, the policy control network element may still be the PCF network element, or may have another name. This is not limited in this application.

8. A binding support network element 180 is configured to search for a PCF associated with a session.

In the 5G communication system, the binding support network element may be a binding support function (binding support function, BSF) network element. In the future communication system, the binding support network element may still be the BSF network element, or may have another name. This is not limited in this application.

9. An authentication server 190 is configured to authenticate a service, generate a key to implement two-way authentication for a terminal device, and support a unified authentication framework.

In the 5G communication system, the authentication server may be an authentication server function (authentication server function, AUSF) network element. In the future communication system, the authentication server function network element may still be an AUSF network element, or may have another name. This is not limited in this application.

10. A data management network element 1100 is configured to process a terminal device identifier, perform access authentication, registration, and mobility management, and the like.

In the 5G communication system, the data management network element may be the unified data management (unified data management, UDM) network element. In the future communication system, the unified data management may still be the UDM network element, or may have another name. This is not limited in this application.

11. An application network element is configured to perform application-affected data routing, access a network exposure function network element, interact with a policy framework to perform policy control, and the like.

In the 5G communication system, the application network element may be the application function (application function, AF) network element. In the future communication system, the application network element may still be the AF network element, or may have another name. This is not limited in this application.

12. A network repository network element is configured to maintain real-time information of all network function services in a network.

In the 5G communication system, the network repository network element may be a network repository function (network repository function, NRF) network element. In the future communication system, the network repository network element may still be the NRF network element, or may have another name. This is not limited in this application.

It may be understood that the foregoing network elements or the functions may be network elements in a hardware device, software functions running on dedicated hardware, or virtualized functions instantiated on a platform (for example, a cloud platform).

For ease of description, this application is described below by using an example in which the application network element is the AF network element, the binding support network element is the BSF network element, the network repository network element is the NRF network element, and the policy control network element is the PCF network element.

Further, the AF network element is referred to as an AF for short, the BSF network element is referred to as a BSF for short, the NRF network element is referred to as an NRF for short, and the PCF network element is referred to as a PCF for short. In other words, in the following descriptions of this application, the AF may be replaced with the application network element, the BSF may be replaced with the binding support network element, the NRF may be replaced with the network repository network element, and the PCF may be replaced with the policy control network element.

For ease of description, in this application, a data transmission method is described by using an example in which an apparatus is an AF entity, a BSF entity, or a PCF entity. For an implementation method in which the apparatus is a chip in the AF entity, a chip in the BSF entity, or a chip in the PCF entity, refer to specific descriptions about the data transmission method in which the apparatus is the AF entity, the BSF entity, or the PCF entity. Details are not repeated.

In the network architecture shown in FIG. 1, the terminal device is connected to the AMF through an N1 interface, the RAN is connected to the AMF through an N2 interface, and the RAN is connected to the UPF through an N3 interface.

UPFs are connected to each other through an N9 interface, and the UPF is interconnected to a data network (data network, DN) through an N6 interface.

The SMF controls the UPF through an N4 interface. The AMF is connected to the SMF through an N11 interface.

The AMF obtains subscription data of the terminal device from a unified data management (unified data management, UDM) unit through an N8 interface. The SMF obtains the subscription data of the terminal device from the UDM unit through an N10 interface.

The AMF obtains policy data from the PCF through an N15 interface. The SMF obtains the policy data from the PCF through an N7 interface.

The AF is connected to the PCF through an N5 interface.

In addition, the AF and the PCF each are connected to the BSF. When the SMF triggers establishment of a policy session, the PCF registers, with the BSF, session information of the policy session and an identifier of a PCF corresponding to the policy session. In this case, the AF may query, from the BSF based on the session information corresponding to the policy session, the identifier of the PCF corresponding to the policy session. In this way, the SMF and the AF select a same PCF for a same session.

It should be noted that names of the network elements and communication interfaces between the network elements in FIG. 1 are briefly described by using a name stipulated in a current protocol as an example, but embodiments of this application are not limited to being applied only to a currently known communication system. Therefore, standard names appearing when the current protocol is used as an example for description are all functional descriptions. Specific names of a network element, an interface, signaling, or the like are not limited in this application, indicate only functions of the network element, the interface, or the signaling, and may be correspondingly extended to another system, for example, a 2G, 3G, 4G, or future communication system.

The foregoing network architecture that is shown in FIG. 1 and to which embodiments of this application is applicable is merely an example, and a network architecture applicable to embodiments of this application is not limited thereto. Any network architecture that can implement functions of the foregoing network elements is applicable to embodiments of this application.

For example, in some network architectures, network function network elements and entities such as the AMF network element, the SMF network element, the PCF network element, the BSF network element, and the UDM network element are all referred to as network function (network function, NF) network elements. Alternatively, in some other network architectures, a set of network elements such as the AMF network element, the SMF network element, the PCF network element, the BSF network element, and the UDM network element may be referred to as a control plane function network element.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, a new radio (new radio, NR) system, or a future network. The technical solutions provided in this application may be further applied to a future communication system, for example, a 6th generation mobile communication system. Alternatively, the communication system may be a public land mobile network (public land mobile network, PLMN), a device-to-device (device-to-device, D2D) communication system, a machine-to-machine (machine-to-machine, M2M) communication system, an internet of things (internet of Things, loT) communication system, or another communication system.

In embodiments of this application, the user equipment or the access network device includes a hardware layer, an operating system layer running above the hardware layer, and an application layer running above the operating system layer. The hardware layer includes hardware such as a central processing unit (central processing unit, CPU), a memory management unit (memory management unit, MNW), and a memory (also referred to as a main memory). An operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an entity for performing the method provided in embodiments of this application is not particularly limited in embodiments of this application, provided that a program that records code of the method provided in embodiments of this application can be run to perform communication according to the method provided in embodiments of this application. For example, the entity for performing the method provided in embodiments of this application may be the user equipment or the access network device, or may be a functional module that is in the user equipment or the access network device and that can invoke and execute the program.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium may include but is not limited to: a magnetic storage component (for example, a hard disk, a floppy disk or a magnetic tape), an optical disc (for example, a compact disc (compact disc, CD), a digital versatile disc (digital versatile disc, DVD)), a smart card and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable storage media" may include but is not limited to a radio channel, and various other media that can store, include, and/or carry instructions and/or data.

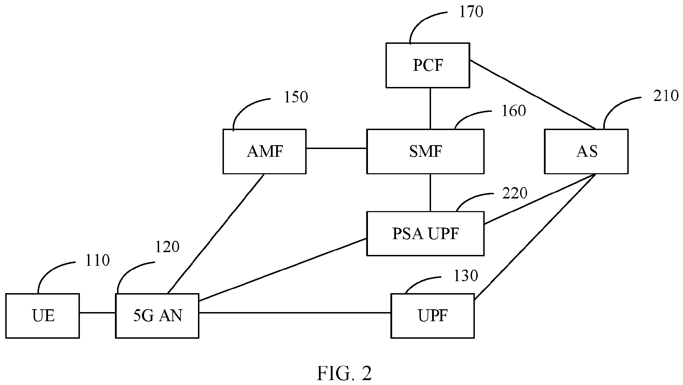

Embodiments of this application further relate to a multicast mode. The following describes in detail a method for sending data of a service in the multicast mode with reference to FIG. 2. FIG. 2 is a schematic diagram of a network architecture to which a method for sending data of a service in a multicast mode is applicable.

It should be noted that the data transmission method provided in this application is also applicable to sending data of a service in a broadcast mode. The multicast mode shown in FIG. 2 is merely an example, and does not constitute any limitation on the protection scope of this application. When the data transmission method provided in this application is applied to sending the data of the service in the broadcast mode, the multicast mode described in embodiments of this application is replaced with the broadcast mode. A specific data transmission procedure is similar to a multicast data transmission procedure. Details about the broadcast mode are not described in this application.

As shown in FIG. 2, the following separately describes each part in the network architecture.
1. User equipment 110 is the same as the user equipment 110 in FIG. 1, and details are not described herein again.
2. A 5G access network (5G access network, 5G AN) 120 is the same as the (R)AN 120 in FIG. 1, and details are not described herein again.
3. A user plane network element 130 is the same as the user plane network element 130 in FIG. 1, and details are not described herein again.
4. An access management network element 150 is the same as the access management network element 150 in FIG. 1, and details are not described herein again.
5. A policy control network element 170 is the same as the policy control network element 170 in FIG. 1, and details are not described herein again.
6. An application service unit 210 provides services such as a basic service, a supplementary service, a multimedia conference, converged communication, a short message gateway, and a standard console.

In a 5G communication system, the application service unit may be an application server (application server, AS). In a future communication system, the application service unit may still be the AS, or may have another name. This is not limited in this application.

In addition, it should be noted that the AS in this embodiment of this application and an AF may be deployed together, or may be separately deployed. When the AS and the AF are separately deployed, signaling interaction between the AS and a core network needs to be implemented through the AF. However, for ease of description, in this embodiment of this application, the signaling interaction between the AS and the core network is described as direct interaction between the AS and the core network, and the AF is not related.

7. A session management network element 160 is similar to the session management network element 160 in FIG. 1, and details are not described herein again.

8. A protocol data unit session anchor user plane network element (protocol data unit session anchor UPF, PSA UPF) 220 is similar to the user plane network element 130 in FIG. 1, and details are not described herein again.

In FIG. 2, when the data of the service is sent in the multicast mode, a transmission path of the data of the service includes: a transmission path between the AS and the UPF, a transmission path between the UPF and the 5G AN, and a transmission path between the 5G AN and the UE. When the data of the service is sent in a unicast mode, a transmission path of the data of the service includes: a transmission path between the AS and the PSA UPF, a transmission path between the PSA UPF and the 5G AN, and a transmission path between the 5G AN and the UE.

For example, the AS (for example, the AS may be a group communication service application server (group communication service AS, GCS AS)) sends the data of the service to the UPF through the transmission path between the AS and the UPF, and then the UPF sends the data of the service to the 5G AN through the transmission path between the UPF and the 5G AN.

In a possible implementation, the UPF only needs to send one piece of data of the service to the 5G AN through the transmission path between the UPF and the 5G AN, and the 5G AN may send the data of the service to a plurality of UEs, or the 5G AN may send the data of the service to UE.

Specifically, the 5G AN may flexibly determine a sending mode of the data of the service based on an air interface condition, a quantity of UEs that receive the data of the service, and the like. For example, the sending mode may be a point-to-multipoint (point-to-multipoint, PTM) sending mode, or may be a point-to-point (point-to-point, PTP) sending mode. The PTM sending mode may be understood as that the 5G AN sends one piece of data of the service, and a plurality of UEs can receive the data of the service. The PTP sending mode may be understood as that the 5G AN sends one piece of data of the service, and only one UE can receive the data of the service.

It should be noted that, for a same piece of data of the service, the 5G AN may enable both the PTM sending mode and the PTP sending mode. For example, the PTM sending mode is used for UE #1 and UE #2 that receive the data of the service, and the PTP sending mode is used for UE #3 that receives the data of the service.

For example, virtual reality (virtual reality, VR) video services are bandwidth-hungry. If a VR video is played in a unicast mode, data of the video service can be simultaneously sent to only four user equipments in a single cell. If the VR video is watched on a plurality of (for example, 40) user equipments in the cell, severe resource consumption is caused.

If a same VR video is watched on a plurality of user equipments in a same cell, the data of the video service may be sent in a 5G multicast mode. In this way, the UPF needs to send only one piece of data of the video service to the 5G AN, and the 5G AN separately sends the data of the video service to the plurality of user equipments, so that the plurality of user equipments can all receive the data of the video service to complete video playback, so as to save resources.

A play mode of the VR video includes a field of view (field of view, FOV) mode or a 360 mode. When the data of the VR video service is separately sent to the user equipment in the unicast mode, the FOV mode is generally used. The FOV mode can save bandwidth, and destination IP addresses of data packets of the service sent to different user equipments in the FOV mode are different (for example, are IP addresses of the different user equipments). Because different users have different angles of view, landscapes seen by the users are different, and content of the data packets sent in the FOV mode is also different. However, when the data of the VR video service is sent in the 5G multicast mode, the 360 mode needs to be used, because it is difficult for different users to keep a completely consistent angle of view, and bandwidth required in the 360 mode is higher than bandwidth required in the FOV mode. Therefore, when a small quantity of users watch (for example, only one user watches) the VR video in a base station, the data of the VR video service may be sent in the FOV mode. When a quantity of users increases, the data of the VR video service may be sent in the multicast mode in the 360 mode.

It can be learned from the foregoing descriptions that, for a service similar to the VR video service, when data of the service is sent in a unicast mode or a multicast mode, QoS requirements such as bandwidth requirements are different. This application provides a data transmission method, to flexibly determine a service data transmission mode. Therefore, service data transmission can be implemented in a most economical service data transmission mode, to save radio resources.

A type of a service is not limited in embodiments of this application. The service may be the foregoing VR video service, or may be a service similar to the VR video service. Data of the service may be sent in a unicast mode and a multicast mode, and sending the data of the service in the unicast mode and sending the data of the service the multicast mode may have different QoS requirements.

It should be understood that the method provided in embodiments of this application may be applied to a 5G communication system, for example, the communication system shown in FIG. 1.

A specific structure of an entity for performing the method provided in embodiments of this application is not particularly limited in the following embodiments, provided that a program that records code of the method provided in embodiments of this application can be run to perform communication according to the method provided in embodiments of this application. For example, the entity for performing the method provided in embodiments of this application may be a terminal device, a core network device, or a functional module that is in the terminal device or the core network device and that can invoke and execute the program.

For ease of understanding embodiments of this application, the following descriptions are provided.

First, in this application, "enable" may include "directly enable" and "indirectly enable". When a piece of information is described to as enabling A, the information may directly enable A or indirectly enable A, but it does not necessarily mean that the information carries A.

Information enabled by the information is referred to as to-be-enabled information. In a specific implementation process, the to-be-enabled information may be enabled in a plurality of manners, for example, but not limited to, a manner of directly enabling the to-be-enabled information. For example, the to-be-enabled information or an index of the to-be-enabled information is enabled. Alternatively, the to-be-enabled information may be indirectly enabled by enabling other information, where there is an association relationship between the other information and the to-be-enabled information. Alternatively, only a part of the to-be-enabled information may be enabled, and the other part of the to-be-enabled information is known or pre-agreed on. For example, specific information may alternatively be enabled by using an arrangement sequence of all pieces of information that is pre-agreed on (for example, stipulated in a protocol), to reduce enabling overheads to some extent. In addition, a common part of all the pieces of information may be further identified and enabled in a unified manner, to reduce enabling overheads caused by separately enabling same information.

Second, "first", "second", and various numerical numbers (for example, "#1", and "#2") shown in this application are merely for ease of description, and are used to distinguish between objects, but are not intended to limit the scope of embodiments of this application. For example, the numbers are used to distinguish between different messages, but do not indicate a particular order or sequence. It should be understood that the objects described in this way are interchangeable in an appropriate circumstance, so that a solution other than embodiments of this application can be described.

Third, in this application, "preset" may include "predefined", for example, defined in a protocol. "Pre-definition" may be implemented by prestoring corresponding code or a corresponding table in a device (for example, including a terminal device or a core network device), or in another manner that may indicate related information. A specific implementation is not limited in this application.

Fourth, "storage" in embodiments of this application may be storage in one or more memories. The one or more memories may be separately disposed, or may be integrated into an encoder, a decoder, a processor, or a communication apparatus. Alternatively, a part of the one or more memories may be separately disposed, and a part of the one or more memories are integrated into the translator, the processor, or the communication apparatus. A type of the memory may be a storage medium in any form. This is not limited in this application.

Fifth, "protocols" in embodiments of this application may be standard protocols in the communication field, for example, may include a 5G protocol, a new radio (new radio, NR) protocol, and a related protocol used for a future communication system. This is not limited in this application.

Without loss of generality, the following describes in detail the data transmission method provided in embodiments of this application by using interaction between user equipment, an access network device, a core network device, and an application server as an example.

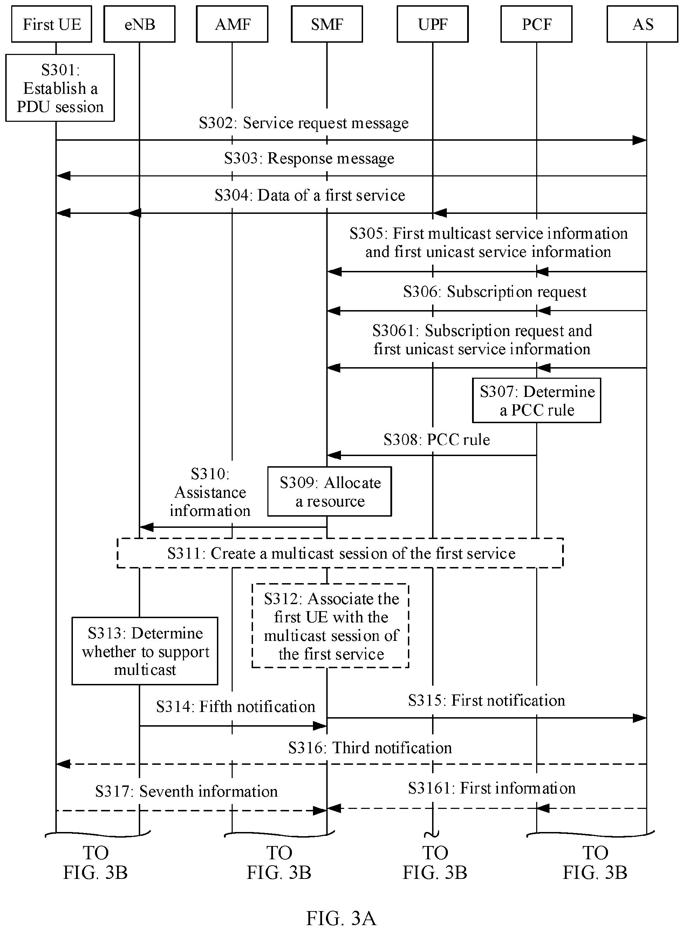

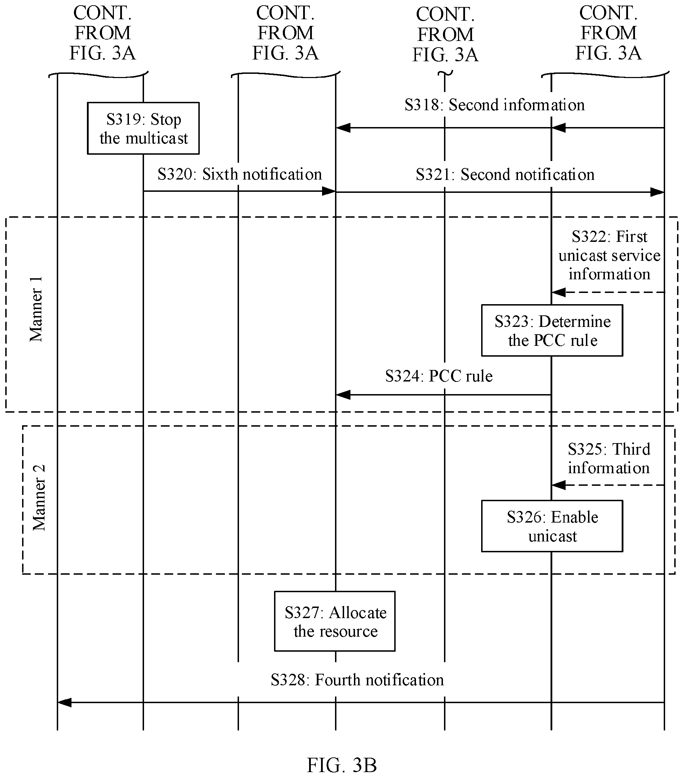

FIG. 3A and FIG. 3B are a schematic flowchart of a data transmission method according to an embodiment of this application. The data transmission method includes at least some of the following steps.

S301: First user equipment establishes a protocol data unit session (protocol data unit session, PDU session), which is referred to as a PDU session below.

The first user equipment may be any user equipment that needs to establish the PDU session. The PDU session may be used for transmission of signaling between the user equipment and an application server.

In this embodiment of this application, the application server may be referred to as an AS for short, the user equipment may be referred to as UE for short, a user plane network element may be referred to as a UPF for short, and a PDU session anchor UPF network element may be referred to as a PSA UPF for short. It should be understood that the application server, the user equipment, and the user plane network element each may alternatively be referred to as another name for short. A name of a device or a network element in this application is not limited, provided that a function of the device or the network element can be implemented.

In addition, it should be noted that how the first UE establishes the PDU session using the UPF is not limited in this embodiment of this application. For details, refer to related stipulations on establishing a PDU session by UE in a current protocol or a next-generation protocol. Details are not described in this application.

After the first UE establishes the PDU session, in this embodiment of this application, the first UE may send a service request message to the AS through the PDU session, to request the AS to deliver data of a service. For example, the method procedure shown in FIG. 3A and FIG. 3B further includes S302: The first UE sends the service request message to the AS. The service request message is for requesting to obtain data of a first service.

It should be noted that a specific service type of the first service is not limited in this embodiment of this application, and the data of the first service can be sent in a unicast mode and a multicast mode.

Sending the data of the first service in the unicast mode may be referred to as transmitting unicast data of the first service (the unicast data of the first service may also be referred to as unicast data for short in this application). Sending the data of the first service in the multicast mode may be referred to as transmitting multicast data of the first service (the multicast data of the first service may also be referred to as multicast data for short in this application). Specifically, sending the data of the first service in the unicast mode and sending the data of the first service in the multicast mode have different QoS requirements.

For example, the first service is a VR video service. The first UE may send, to the AS through the PDU session established in step S301, a service request message corresponding to the VR video service, to request the AS to deliver data of the VR video service.

For example, the service request message corresponding to the VR video service may be a hypertext transfer protocol (hypertext transfer protocol, HTTP) request message. In this case, step S302 may be understood as that the first UE sends the HTTP request message to the AS, where the HTTP request message is for requesting a resource of one video service. For example, that the first UE clicks a video link may be understood as that the first UE sends the service request message corresponding to the video service to the AS, where the service request message corresponding to the video service carries a resource link of the video service.

Further, after the AS receives the service request message from the first UE, the AS sends a response message to the UE in response to the service request message. That is, the method procedure shown in FIG. 3A and FIG. 3B further includes S303: The AS sends the response message to the first UE.

For example, the AS sends the data of the first service to the first UE via the response message. For another example, the AS notifies, via the response message, the first UE that a request for the data of the first service fails. For still another example, the AS indicates, via the response message, the first UE to resend the service request message in a preset time period (for example, a start moment of the preset time period is a moment at which the first UE receives the response message, and duration is preset, which is not limited in this application).

A specific function of the response message is not limited in this embodiment of this application.

It should be noted that, a scenario in which the first UE succeeds in requesting to obtain the data of the service, namely, a scenario in which the AS needs to send the data of the first service to the first UE, is mainly considered in this embodiment of this application. A scenario in which the first UE fails to request to obtain the data of the service or resends the request is not described in this application.

That is, the method procedure shown in FIG. 3A and FIG. 3B further includes S304: The AS sends the data of the first service to the first UE.

In a possible implementation, the AS may start to send the unicast data of the first service to the first UE in the unicast mode.

It should be noted that, when the unicast data of the first service is sent to the first UE in the unicast mode, the response message in step S303 may include the unicast data of the first service, or the unicast data of the first service is sent via a message other than the response message shown in step S303.

In addition, this depends on an implementation. Step S304 may be triggered by another service request message. For example, when the service request message is an HTTP-based message, the first UE sends a new service request message to the AS before the AS performs step S304.

In another possible implementation, the AS may start to send the multicast data of the first service to the first UE in the multicast mode.

An example in which the AS first sends the unicast data of the first service to the first UE in the unicast mode is used below for description.

For differentiation, in this embodiment of this application, the data of the first service sent by the AS to the first UE in the unicast mode is referred to as the unicast data, and the data of the first service sent by the AS to the first UE in the multicast mode is referred to as the multicast data.

It should be noted that, that the unicast data is different from the multicast data may mean that a target IP address of a unicast data packet is different from a target IP address of a multicast data packet. In this embodiment of this application, the target IP address of the unicast data packet is an IP address of the first UE, and the target IP address of the multicast data packet is a multicast IP address and is irrelevant to the IP address of the first UE. Alternatively, that the unicast data is different from the multicast data may mean that content of the unicast data packet is different from that of the multicast data packet in addition to different target IP addresses. For example, if the first service is a video service, data content of the unicast data sent by the AS to the first UE is data content in the FOV format described above, and data content of the multicast data sent by the AS to the first UE is data content in the 360 format described above. It should be understood that, that the first service is a video service is merely an example for illustrating that the unicast data and the multicast data sent by the AS are different, and does not constitute any limitation on the protection scope of this application. When the first service is another type of service, unicast data and multicast data corresponding to the service sent by the AS are similarly different. Details are not described herein again.

It should be further noted that, before the AS sends the unicast data to the first UE, other signaling interaction may further be performed between the first UE and the AS. For example, before sending the unicast data to the first UE, the AS may further send, to the first UE, a message other than the message carrying the unicast data.

In this embodiment of this application, the signaling interaction between the first UE and the AS that is performed before the AS sends the unicast data to the first UE is not limited.

For example, before the AS sends the unicast data to the first UE, the AS may first authenticate the first UE, to determine that the first UE is authorized, and may send the unicast data to the first UE. In this case, the signaling interaction between the first UE and the AS may further include authentication-related signaling interaction.

In this embodiment of this application, if the AS supports sending the multicast data of the first service in the multicast mode, the AS may send multicast information of the first service to the first UE.

Optionally, the message carrying the unicast data further includes the multicast information of the first service.

Alternatively, the AS sends multicast information of the first service to the first UE via the message other than the message carrying the unicast data.

The multicast information of the first service indicates the first UE to learn of the multicast transmission mode of the data of the first service and how the first UE joins a multicast session of the first service. The multicast information of the first service includes a multicast service identifier, for example, a multicast address and an optional source address, used for sending the data of the first service in the multicast mode.

It should be noted that a reason why the AS can send the unicast data of the first service to the first UE in the unicast mode is that a core network device (for example, a PCF, an NEF, an SMF, the UPF, or an AMF) and an access network device allocate a unicast resource required for transmitting the unicast data of the first service between the AS and the first UE in the unicast mode. Therefore, the AS can request the core network device to allocate a response resource for sending the unicast data. The AS sends, to the core network device, first unicast service information corresponding to sending of the data of the first service in the unicast mode, to implement this process. When receiving the first unicast service information, the core network device allocates the resource required for sending the unicast data in the unicast mode.

In this embodiment of this application, in the foregoing unicast resource allocation procedure, the multicast session for sending the data of the first service in the multicast mode may be created. Alternatively, in the unicast resource allocation procedure, the core network device side learns that the first service supports sending the multicast data of the first service in the multicast mode.

In this embodiment of this application, the data of the first service can be sent both in the unicast mode and the multicast mode. Enabling a core network element to learn that the data of the first service can be sent in the multicast mode may be implemented in the following several manners.

Manner 1: In this embodiment of this application, the AS may send first multicast service information corresponding to the first service to the core network element (for example, a policy control network element, a session management network element, or a network exposure network element), so that the core network element learns that the data of the first service can be sent in the multicast mode. In manner 1, the method procedure shown in FIG. 3A and FIG. 3B further includes S305: The AS sends the first unicast service information and the first multicast service information to the core network element.

In manner 1, the first multicast service information and the first unicast service information may be sent to the core network element via a single message (for example, a first message). It can be learned from step S304 that after the AS receives the service request message of the first UE, the AS determines to first send the unicast data to the first UE in the unicast mode, and the AS may send, to the PCF, the first unicast service information that corresponds to the first service and that is recorded when the data of the first service is sent in the unicast mode.

The first unicast service information includes information about a first QoS requirement for sending the unicast data in the unicast mode. Further, the first unicast service information further includes first service flow (flow) description information. The first service flow description information is for identifying the unicast data. For example, the first service flow description information may be information such as an internet protocol (Internet protocol, IP) address, a port number, and a protocol number that correspond to a service flow, or service identifier information.

It should be noted that content specifically included in the first unicast service information is not limited in this embodiment of this application. For details, refer to the first unicast service information in the current protocol or the next-generation protocol, where the first unicast service information needs to be sent to the user equipment when the AS sends the unicast data in the unicast mode.

In manner 1, the AS may send the first unicast service information to the PCF together with the first multicast service information, that is, the first unicast service information and the first multicast service information may be sent to the PCF via the same message (for example, the first message).

The first multicast service information includes the multicast service identifier. Further, the first multicast service information may further include information about a second QoS requirement for sending the multicast data in the multicast mode and/or second service flow (flow) description information. The second service flow description information is for identifying the multicast data, and information about the multicast service identifier may be understood as multicast channel information recorded when the data of the first service is sent in the multicast mode.

Manner 2: In this embodiment of this application, the AS may send a subscription request to the core network element, where the subscription request carries assistance information for assisting a network in determining whether sending the data of the first service in the multicast mode is supported, so that the core network element learns that the data of the first service can be sent in the multicast mode. The method procedure shown in FIG. 3A and FIG. 3B in manner 2 further includes S306: The AS sends the subscription request to the core network element, where the subscription request is for subscribing to a notification indicating whether sending the data of the first service in the multicast mode is supported, and the subscription request includes the assistance information.

The assistance information includes one or more of the following information: a bandwidth required for sending the data of the first service in the multicast mode, a bandwidth required for sending the data of the first service in the unicast mode, a first quality of service QoS requirement for sending the data of the first service in the unicast mode, and a second QoS requirement for sending the data of the first service in the multicast mode.

Manner 3: In this embodiment of this application, the AS may send a subscription request and the first unicast service information to the core network element, where the subscription request carries a first multicast service identifier or the assistance information, so that the core network element learns that the data of the first service can be sent in the multicast mode. The method procedure shown in FIG. 3A and FIG. 3B in manner 3 further includes S3061: The AS sends the subscription request and the first unicast service information to the core network element, where the subscription request is for subscribing to a notification indicating whether sending the data of the first service in the multicast mode is supported. In other words, in manner 3, the subscription request and first multicast service information may be sent to the core network element via a single message (for example, a first message).

Manner 4: In this embodiment of this application, the AS may send first multicast service information, the first unicast service information, and a subscription request to the core network element, so that the core network element learns that the data of the first service can be sent in the multicast mode. In manner 4, step S306 and step S305 may be one step, and may be understood as that the subscription request, the first unicast service information, and the first multicast service information are sent via a single message (for example, a first message).

Manner 1 to manner 4 indicate that the AS may send different information combinations to the core network element, so that the core network element learns that sending the data of the first service in the multicast mode is supported. The following briefly illustrates how the AS sends information to the policy control network element. In this embodiment of this application, the policy control network element may be referred to as the PCF for short. It should be understood that the policy control network element may alternatively be referred to as another name, and the name of the policy control network element is not limited in this application.

In a possible implementation, that the AS sends information to the PCF may be that the AS directly sends the information to the PCF.

Alternatively, in another possible implementation, that the AS sends information to the PCF may be that the AS sends the information to the network exposure network element, the network exposure network element stores the information in a UDR, and then the PCF obtains the information from the UDR (for example, the UDR actively forwards the information to the PCF, or the PCF actively obtains the information from the UDR).

In this embodiment of this application, the network exposure network element may be referred to as a network exposure function (network exposure function, NEF) network element, which is referred to as the NEF for short. It should be understood that the network exposure network element may alternatively be referred to as another name, and the name of the network exposure network element is not limited in this application.

It can be learned from the foregoing manner 2, manner 3, and manner 4 that, in the embodiment shown in FIG. 3A and FIG. 3B, the AS may subscribe to the notification indicating whether sending the data of the first service in the multicast mode is supported, so that when the network (for example, a 5G network) determines to send or stop sending the data of the first service in the multicast mode, the network sends the notification to the AS, so that the AS learns, in a timely manner, whether the data of the first service can be sent in the multicast mode, to flexibly switch a transmission mode of the data of the first service.

Specifically, the subscription request is for subscribing to a notification indicating that sending the data of the first service to the first user equipment in the multicast mode is supported, the subscription request is for subscribing to a notification indicating that sending the data of the first service to the first user equipment in the multicast mode is not supported, or the subscription request is for subscribing to a notification indicating that sending the data of the first service to the first user equipment in the multicast mode is supported and a notification indicating that sending the data of the first service to the first user equipment in the multicast mode is not supported.

For example, when the data of the first service is sent to the first user equipment in the unicast mode, the AS may subscribe to the notification indicating that sending the data of the first service to the first user equipment in the multicast mode is supported. Alternatively, when the data of the first service is sent to the first user equipment in the multicast mode, the AS may subscribe to the notification indicating that sending the data of the first service to the first user equipment in the multicast mode is not supported.

Alternatively, the AS may subscribe to a capability change notification, namely, a notification that is sent to the AS when the network changes from supporting sending the data of the first service to the first user equipment in the multicast mode to not supporting the multicast mode, or when the network changes from not supporting the multicast mode to supporting the multicast mode.

Optionally, the AS may directly send the subscription request to the SMF, or may forward the subscription request to the SMF through the PCF. A specific subscription manner is not limited in this application.

For ease of differentiation, in this embodiment of this application, the notification that is sent by the SMF to the AS and that indicates that sending the data of the first service in the multicast mode is supported is referred to as a first notification, and the notification that is sent by the SMF to the AS and that indicates that sending the data of the first service in the multicast mode is not supported (for example, sending the data of the first service in the unicast mode is supported or sending the data of the first service in the multicast mode is stopped) is referred to as a second notification.

It should be noted that, after receiving the subscription request, the core network element needs to send a subscription response to the AS, to indicate to the AS whether the subscription succeeds. In this embodiment of this application, a case in which the subscription succeeds is mainly considered. Therefore, a complete subscription procedure is not shown in FIG. 3A and FIG. 3B.

In a possible implementation, when the AS successfully subscribes to the notification, and the SMF determines that sending the data of the first service in the multicast mode is supported, the SMF sends the first notification to the AS, to notify the AS that sending the data of the first service in the multicast mode is supported.

In another possible implementation, when the AS successfully subscribes to the notification, and the SMF determines that sending the data of the first service in the multicast mode is not supported, the SMF sends the second notification to the AS, to notify the AS that sending the data of the first service in the multicast mode is not supported.

In a possible implementation, the SMF may determine, based on a capability of an access network device accessed by the first UE, whether sending the data of the first service to the first UE in the multicast mode is supported. The capability of the access network device may be whether the access network device supports sending the data in the multicast mode, for example, whether the access network device supports sending the data in a PTM mode.

In another possible implementation, the SMF may determine, based on a capability of the first UE, whether sending the data of the first service in the multicast mode is supported, where the capability of the first UE may be whether the first UE supports receiving the data in the multicast mode. The SMF may determine, based on information that is reported by the first UE and that indicates whether the first UE supports receiving the data of the first service in the multicast mode, whether sending the data of the first service in the multicast mode is supported.

In still another possible implementation, the SMF may determine, based on a notification that is reported by an access network device and that indicates whether the access network device supports sending the data of the first service to the first UE in the multicast mode, whether sending the data of the first service to the first UE in the multicast mode is supported.

It should be noted that, after receiving the first notification or the second notification sent by the SMF, the AS needs to send a notification response to the SMF, to respond to whether the AS successfully receives the notification. In this embodiment of this application, a case in which the SMF successfully receives the notification is mainly considered, and the notification response is not shown in FIG. 3A and FIG. 3B.

For example, after receiving the first notification, the AS may determine, based on the first notification, to send the multicast data of the first service to the first user equipment in the multicast mode.

Alternatively, for example, after receiving the second notification, the AS may determine, based on the second notification, to send the unicast data of the first service to the first user equipment in the unicast mode.

It can be learned from the foregoing manner 1 to manner 4 in which the core network element learns that the data of the first service can be sent in the multicast mode that, in this embodiment of this application, there are the following several possibilities for sending the subscription request to the core network element by the application server.

Possibility 1: The application server sends the first message to the core network element, where the first message includes the subscription request, the subscription request includes the assistance information, the assistance information is for determining whether sending the data of the first service to the first UE in the multicast mode is supported, and the assistance information includes the QoS requirement for sending the data of the first service in the unicast mode and the QoS requirement for sending the data of the first service in the multicast mode.

Possibility 2: The first message via which the application server sends the first unicast service information to the core network element includes the subscription request, and the first message carries the multicast service identifier in possibility 2. Specifically, the subscription request or the first unicast service information carries the multicast service identifier, and the information about the second QoS requirement corresponding to a multicast service may be sent to the core network element before or after the message including the first unicast service information and the subscription request is sent, or may be sent to the core network element via the first message.

Further, in possibility 2, the core network element can determine the information about the first QoS requirement based on the first unicast service information, obtain the information about the second QoS requirement based on the multicast service identifier, and determine the assistance information based on the information about the first QoS requirement and the information about the second QoS requirement, which may also be understood as that the assistance information includes the information about the first QoS requirement and the information about the second QoS requirement.

Possibility 3: The first message via which the application server sends the first unicast service information to the core network element includes the subscription request, where the subscription request includes the first multicast service information and/or the assistance information.

For example, in this embodiment of this application, after receiving the first message, the PCF may determine a policy and charging control (policy and charging control, PCC) rule based on the first message. That is, the method procedure shown in FIG. 3A and FIG. 3B may further include S307: The PCF determines the PCC rule.

Further, the PCF may send the determined PCC rule to the SMF. That is, the method procedure shown in FIG. 3A and FIG. 3B further includes S308: The PCF sends the PCC rule to the SMF.

Specifically, depending on different content included in the received first message, there are the following several possibilities for steps that may be performed by the PCF after the PCF receives the first message.

Possibility 1: If the first message includes the subscription request, and the subscription request carries the assistance information, the PCF sends the subscription request to the SMF, where the subscription request includes the assistance information.

In possibility 1, after receiving the subscription request, the SMF may learn of the assistance information based on the subscription request.

Possibility 2: The first message includes the first unicast service information, the first multicast service information, and the subscription request, where the first multicast service information includes the multicast service identifier. In possibility 2, the PCF determines, based on the first unicast service information, a first PCC rule used for sending the data of the first service in the unicast mode, and the PCF determines, based on the first multicast service information and the subscription request, that the first PCC rule includes the subscription request and the multicast service identifier. If the first message further includes a second QoS parameter of a first multicast service or the assistance information, the first PCC rule may further include the second QoS parameter of the first multicast service or the assistance information.

In possibility 2, after the SMF receives the first PCC rule, if the first PCC rule does not include the second QoS parameter of the first multicast service or the assistance information, the SMF obtains, based on the multicast service identifier, the second QoS parameter used for sending the data in the multicast mode, to determine the assistance information.

Possibility 3: The first message includes the first unicast service information and the subscription request, the subscription request includes the first multicast service information, and the first multicast service information includes the multicast service identifier. In possibility 3, the PCF determines, based on the first unicast service information, a first PCC rule used for sending the data of the first service in the unicast mode. In addition, the PCF determines, based on the subscription request, that the first PCC rule includes the subscription request, where the subscription request includes the multicast service identifier.

In possibility 3, after the SMF receives the first PCC rule, if the subscription request does not include a second QoS parameter or the assistance information, the SMF may learn of the multicast service identifier based on the subscription request, and obtain, based on the multicast service identifier, the second QoS parameter used for sending the data of the first service in the multicast mode, to determine the assistance information.

Possibility 4: The first message includes the first unicast service information and the subscription request, where the subscription request includes the assistance information. In possibility 4, the PCF determines, based on the first unicast service information, a first PCC rule used for sending the data of the first service in the unicast mode, where the first PCC rule includes the subscription request, and the subscription request includes the assistance information.

In possibility 4, after receiving the first PCC rule, the SMF may learn of the assistance information based on the subscription request.

Further, after the PCF sends the determined first PCC rule to the SMF, the SMF may allocate, based on the first PCC rule, a unicast resource for sending the data of the first service through the PDU session. That is, the method procedure shown in FIG. 3A and FIG. 3B further includes S309: The SMF allocates the resource.

For example, the SMF may map, based on the first PCC rule, a QoS flow corresponding to the data of the first service to an existing QoS flow or a newly established QoS flow. For another example, the SMF initiates a procedure of modifying an existing QoS flow or establishing a new QoS flow. In other words, the SMF determines a first QoS flow required for sending the data of the first service in the unicast mode, to send the data of the first service in the unicast mode through the first QoS flow.

Optionally, in step S307, if the first multicast service information received by the PCF includes the information about the second QoS requirement for sending the multicast data of the service in the multicast mode and the second service flow (flow) description information, where the second service flow description information is for identifying the multicast data, and for example, the second service flow description information may be information such as a multicast IP address, a source address for sending a second service flow, a port number, and a protocol number that correspond to the service flow, or service identifier information, in step S307, the PCF may further formulate a second PCC rule based on the first multicast service information. Correspondingly, the PCF may also send the second PCC rule corresponding to the first service to the SMF, and the SMF may determine, based on the second PCC rule, the second QoS parameter used for sending the data of the first service in the multicast mode.

Further, the SMF may send, to the access network device, the assistance information for assisting the access network device in determining whether to send the data of the first service to the first user equipment in the multicast mode. That is, the method procedure shown in FIG. 3A and FIG. 3B further includes S310: The SMF sends the assistance information to the access network device.

In a possible implementation, when sending information about the first QoS flow to the access network device, the SMF may send the assistance information to the access network device. For example, in a process of allocating the first QoS flow, the SMF may send the information about the first QoS flow and the assistance information to the access network device, where the assistance information includes the second QoS parameter used for sending the data of the first service in the multicast mode.

In this manner, after receiving the information about the first QoS flow and the assistance information from the SMF, the access network device may obtain information about a second QoS flow. For example, when creating the multicast session for the service, the access network device obtains the information about the second QoS flow.

In another possible implementation, after receiving the first QoS flow of the data of the first service from the SMF, the access network device may obtain information about a second QoS flow and the assistance information. The assistance information includes a first QoS parameter used for sending the data of the first service in the unicast mode.

In this manner, after allocating the first QoS flow to the data of the first service, the SMF may associate the first UE with the multicast session corresponding to the first service, that is, indicate, via ninth information, to the access network device that the first UE is associated with the multicast session corresponding to the first service. The access network device learns that the first UE is associated with the multicast session corresponding to the first service, to indicate the access network device to determine whether to send the data of the first service to the first user equipment in the multicast mode. In this case, the method procedure shown in FIG. 3A and FIG. 3B further includes S311 in which the access network device creates the multicast session of the first service and S312 in which the SMF associates the first UE with the multicast session of the first service.

It should be noted that before the SMF sends the assistance information to the access network device, the SMF may receive the assistance information from the PCF. For example, the SMF receives the information about the first QoS requirement and/or the information about the second QoS requirement from the PCF, and determines, based on the information about the first QoS requirement and/or the information about the second QoS requirement, the information about the bandwidth required for sending the data of the first service in the multicast mode and the information about the bandwidth required for sending the data of the first service in the unicast mode, where the two pieces of information may be included in the assistance information.

In this embodiment of this application, if the multicast session is managed by a multicast SMF different from the SMF, the creation of the multicast session of the first service may further include: The SMF triggers the multicast SMF to create the multicast session of the first service. A triggering process may be that the SMF sends, to the multicast SMF, a message for requesting the first multicast service information, and the multicast SMF determines, based on the message, that the multicast session of the first service needs to be created.

The multicast SMF obtains the second PCC rule used for sending the data of the first service in the multicast mode, the multicast SMF determines the second QoS flow based on the second PCC rule, and the multicast SMF sends the information about the second QoS flow to the access network device currently accessed by the first UE; or the multicast SMF sends the information about the second QoS flow to the SMF, and the SMF sends the information about the second QoS flow to the access network device.

If the multicast session is managed by the SMF, that is, the SMF is also a multicast SMF, the SMF determines the second QoS flow based on the second PCC rule, and the multicast SMF sends the information about the second QoS flow to the access network device currently accessed by the first UE. If the SMF has not obtained, from the PCF, the second PCC rule corresponding to the data of the first service in step S308, the SMF may obtain the second PCC rule from the PCF before performing S311. In this case, the SMF sends the multicast service identifier to the PCF.

Further, the SMF may further send fifth information to the access network device, where the fifth information enables the access network device to send a fifth notification or a sixth notification to the SMF, the fifth notification notifies that sending the data of the first service in the multicast mode is supported, and the sixth notification notifies that sending the data of the first service in the multicast mode is not supported.

It should be noted that the assistance information and the fifth information may be sent to the access network device via a single message, or may be sent to the access network device via different messages. This is not limited in this application.

Further, the access network device may determine, based on the received information, whether to support sending the data of the first service in the multicast mode. The method procedure shown in FIG. 3A and FIG. 3B further includes S313: The access network device determines whether to support the multicast.

The access network device determines, based on information such as the second QoS parameter used for sending the data of the first service in the multicast mode, the first QoS parameter used for sending the data of the first service in the unicast mode, a quantity of UEs that receive the data of the first service in the multicast mode, and signal quality of the first UE, whether it is suitable to send the data of the first service to the first UE in the multicast mode.

For example, if the bandwidth required for sending the data of the first service in the multicast mode is 20M, the bandwidth required for sending the data of the first service in the unicast mode is 15M, a quantity of second UEs that are receiving the data of the first service is 3 (UE #1, UE #2, and UE #3), and a quantity of UEs whose signal quality meets a requirement for receiving the data of the first service in the multicast mode is 2 (the UE #1 and the UE #3), the access network device may determine to support sending the data of the first service to the UE (for example, the UE #1 and the UE #3) whose signal quality meets the multicast requirement in the multicast mode, and determine not to support sending the data of the first service to the UE (for example, the UE #2) whose signal quality does not meet the multicast requirement in the multicast mode.

After determining to support sending the data of the first service to UE (for example, the first UE) in the multicast mode, the access network device may send the fifth notification to the SMF, where the fifth notification notifies the SMF that sending the data of the first service to the first UE in the multicast mode may be supported. The method procedure shown in FIG. 3A and FIG. 3B further includes S314: The access network device sends the fifth notification to the SMF. Specifically, the access network device sends the fifth notification to the SMF corresponding to the PDU session of the first UE.

Optionally, the fifth notification includes an identifier of the first service, for example, the multicast service identifier of the first service.

After receiving the fifth notification, the SMF may send the first notification to the AS, to notify the AS that the multicast data of the first service can be sent to the first UE in the multicast mode. The method procedure shown in FIG. 3A and FIG. 3B further includes S315: The SMF sends the first notification to the AS.

After receiving the first notification, the AS may send a third notification to the first UE, where the third notification indicates the first UE to receive the data of the first service in the multicast mode. The method procedure shown in FIG. 3A and FIG. 3B further includes S316: the AS sends the third notification to the first UE, where
in addition, corresponding application layer interaction may be further performed between the AS and the first UE, which is not limited in this application; and/or
the method procedure shown in FIG. 3A and FIG. 3B further includes S3161: the AS sends first information to the core network element.

The first information indicates to send the data of the first service to the first UE in the multicast mode.

It should be noted that, when the AS sends the third notification but does not send the first information, after the first UE learns that the first UE can receive the data of the first service in the multicast mode, the first UE may indicate, via seventh information, the core network device side to send the data of the first service to the first UE in the multicast mode.

Alternatively, when the AS sends the first information but does not send the third notification, after learning that the core network device side can send the data of the first service to the first UE in the multicast mode, the core network device side may indicate, through the access network device, the first UE to receive the data of the first service in the multicast mode.

Optionally, the AS may further send the multicast information (for example, the multicast address) of the data of the first service to the first UE.

In a possible implementation, after the SMF receives the first information or the seventh information, the SMF indicates the access network device to add the UE to the multicast session. The method procedure shown in FIG. 3A and FIG. 3B further includes S317: The UE sends the seventh information to the SMF, where the seventh information indicates the SMF to send the data of the first service to the first UE in the multicast mode.

Optionally, after receiving the seventh information, the SMF may be triggered to create the multicast session.

Further, the SMF may further send eighth information to the access network device, where the eighth information enables the access network device to send the data of the first service to the first user equipment in the multicast mode. For example, the SMF requests, via the first information sent by the AS and/or the seventh information received from the first UE, to send the data of the first service to the first user equipment in the multicast mode.

Optionally, the SMF may further send fourth information to the access network device, where the fourth information indicates the access network device to send the data of the first service in the PTM mode.

After the foregoing steps are performed, the data of the first service of the first UE is subsequently sent in the multicast mode. In this case, the AS may indicate the core network device side to delete the unicast resource corresponding to the data of the first service. The method procedure shown in FIG. 3A and FIG. 3B further includes S318: The AS sends second information to the core network device, where the second information indicates to delete the first unicast service information.

In an implementation, the second information indicates the core network device to delete the first unicast service information. The PCF or the NEF deletes, based on the second information, the first unicast service information corresponding to the data of the first service. Correspondingly, the PCF indicates the SMF to delete the first PCC rule corresponding to the data of the first service. In this case, the SMF may also delete the first PCC rule, and delete the first QoS flow corresponding to the first service.

In another implementation, the second information indicates to stop sending the data of the first service in the unicast mode. After receiving the second information, the PCF or the NEF may not delete the first unicast service information corresponding to the first service. Correspondingly, the SMF does not need to delete the corresponding first PCC rule either. In addition, to save resources, the SMF may delete the first QoS flow corresponding to the first service.

Optionally, after the data of the first service of the first UE is sent in the multicast mode, the AS may send the subscription request to the core network element, to subscribe to the second notification that is sent when sending the data of the first service to the first UE in the multicast mode is not supported. The subscription request includes the assistance information, and the assistance information is the first QoS parameter.

The foregoing illustrates how to switch from the unicast mode to the multicast mode for sending the data of the first service. Further, in this embodiment of this application, the multicast mode may be switched to the unicast mode for sending the data of the first service.

When the multicast mode needs be switched to the unicast mode for sending the data of the first service, the method procedure shown in FIG. 3A and FIG. 3B further includes the following steps.

S319: The access network device determines not to support sending the data of the first service to the first UE in the multicast mode.

For example, when the access network device determines that a quantity of UEs that support receiving the data of the first service in the multicast mode decreases, or signal quality of the UE (for example, the first UE) that receives the data of the first service in the multicast mode deteriorates, the access network device may determine not to support sending the data of the first service to the first UE in the multicast mode.

A reason why the access network device determines not to support sending the data of the first service in the multicast mode is not limited in this embodiment of this application.

After the access network device determines not to support sending the data of the first service in the multicast mode, the method procedure shown in FIG. 3A and FIG. 3B further includes S320: The access network device sends the sixth notification to the SMF.

The sixth notification notifies the SMF that sending the data of the first service to the first UE in the multicast mode is not supported.

Optionally, the sixth notification may carry the identifier of the first service, for example, the multicast service identifier corresponding to the first service or a multicast session identifier corresponding to the first service.

After receiving the sixth notification, the SMF may send the second notification to the AS, where the second notification notifies the AS that sending the multicast data of the first service to the first UE in the multicast mode is not supported, or may indicate the AS to send the unicast data of the first service in the unicast mode. That is, the method procedure shown in FIG. 3A and FIG. 3B further includes S321: The SMF sends the second notification to the AS.

Optionally, the AS may perform step S306, that is, subscribe to the second notification via the subscription message. Alternatively, the AS may perform the step of subscribing to the second notification in step S318.

Specifically, after the AS determines that the multicast data of the first service cannot be sent to the UE in the multicast mode, there are the following two manners for steps that may be subsequently performed.

### Manner 1:

The AS may send the first unicast service information to the PCF. That is, the method procedure shown in FIG. 3A and FIG. 3B further includes S322: The AS sends the first unicast service information to the core network element.

When determining to switch from the multicast mode to the unicast mode for sending the data of the first service, the AS may send the first unicast service information to the core network element. For a specific sending mode, refer to descriptions of step S305 in which the AS sends the first unicast service information and the first multicast service information to the core network element, step S3061 in which the AS sends the subscription request to the core network element, and step S3061 in which the AS sends the subscription request and the first unicast service information to the core network element. Details are not described herein again.

Optionally, the first unicast service information includes the multicast service identifier corresponding to the first service, to switch from the unicast mode to the multicast mode subsequently.

This case is similar to the foregoing case in which the unicast mode is switched to the multicast mode for sending the data of the first service. The PCF may determine the first PCC rule based on the received first message, and send the first PCC rule to the SMF. That is, the method procedure shown in FIG. 3A and FIG. 3B further includes S323 in which the PCF determines the PCC rule and S324 in which the PCF sends the PCC rule to the SMF. Specifically, for manners in which the PCF determines the PCC rule and sends the PCC rule to the SMF, refer to the foregoing steps S307 and S308. Details are not described herein again.

### Manner 2:

In step S318, if the SMF does not delete the first PCC rule of the first service, and the PCF or the NEF does not delete the first unicast service information, the AS only needs to send third information to the PCF, where the third information indicates to send the data of the first service in the unicast mode.

That is, the method procedure shown in FIG. 3A and FIG. 3B further includes S325: The AS sends the third information to the PCF. S326: The PCF requests, based on the third information, the SMF to send the data of the first service to the first user equipment in the unicast mode.

After the SMF receives an indication indicating to send the data of the first service to the first user equipment in the unicast mode, the method procedure shown in FIG. 3A and FIG. 3B further includes S327: The SMF allocates the resource. Specifically, for a manner of allocating the resource by the SMF, refer to the foregoing step S309. Details are not described herein again.

The AS may indicate, via a fourth notification, the UE to start to receive the data of the first service in the unicast mode. The method procedure shown in FIG. 3A and FIG. 3B further includes S328: The AS sends the fourth notification to the first UE. It should be noted that the fourth notification may be sent to the first UE before step S322 or S325.

In addition, corresponding application layer interaction may be further performed between the AS and the UE. For example, if the service is VR video playback, the AS may obtain a UE perspective.

It should be noted that UPFs in the core network devices through which the AS sends the data of the first service to the first UE in the unicast mode and the multicast mode may be different. For example, the data of the first service that is sent by the AS to the first UE in the unicast mode is first sent to the access network device through the UPF PSA, and then is sent to the first UE, and the data of the first service that is sent by the AS to the first UE in the multicast mode is first sent to the access network device through the UPF, and then is sent to the first UE. A case in which the UPFs corresponding to the two transmission modes may be different is not shown in FIG. 3A and FIG. 3B. However, the protection scope of this application is not affected.

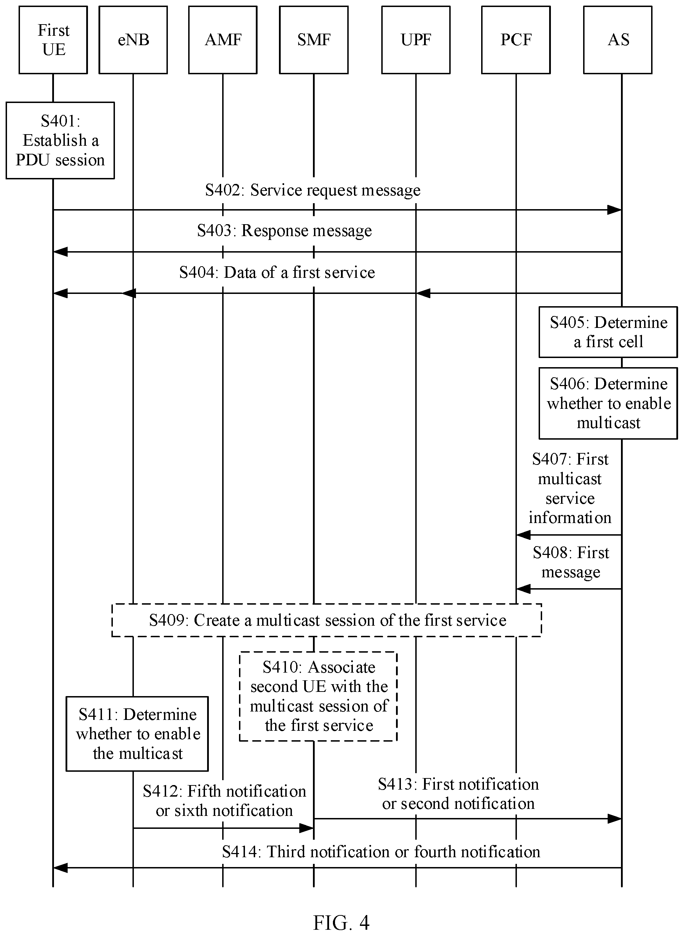

This application further provides a method for determining, by an AS, whether to send data of a first service in a multicast mode. The following provides descriptions with reference to FIG. 4.

FIG. 4 is a schematic flowchart of another data transmission method according to an embodiment of this application. The data transmission method includes at least some of the following steps.

S401: First user equipment establishes a PDU session.

This step is the same as step S301 in FIG. 3A, and details are not described herein again.

S402: The first UE sends a service request message to the AS.

This step is the same as step S302 in FIG. 3A, and details are not described herein again.

S403: The AS sends a response message to the first UE.

This step is the same as step S303 in FIG. 3A, and details are not described herein again.

S404: The AS sends the data of the first service to the UE.

This step is the same as step S304 in FIG. 3A, and details are not described herein again.

In this embodiment, after sending unicast data of the first service to the first UE in a unicast mode, the AS obtains information about a cell accessed by the UE. That is, the method procedure shown in FIG. 4 further includes S405: The AS determines a first cell accessed by the first UE.

In a possible implementation, the AS may subscribe to location information of the first UE from a core network device (for example, a PCF), and specify that precision of the reported location information of the first UE is at a cell granularity. In this implementation, the PCF may send, to the AS, information about the first cell currently accessed by the first UE.

In another possible implementation, the AS may alternatively require the first UE to report information about the currently accessed first cell, and determine, based on the information about the first cell, the first cell accessed by the first UE. For example, the first UE sends the information about the currently accessed first cell to the AS through the established PDU session. For another example, the first UE sends the information about the first cell to the AS via the service request message.

After determining the first cell accessed by the UE, the AS determines, based on a quantity of second UEs in the first cell that receive the data of the first service, whether to send the data of the first service in the multicast mode, where the second UEs include the first UE, or the second UEs include the first UE and at least one UE other than the first UE. That is, the method procedure shown in FIG. 4 further includes S406: The AS determines whether to enable the multicast mode.

When the AS determines to send the data of the first service in the multicast mode, the AS may send first multicast service information corresponding to the first service to a core network element. That is, the method procedure shown in FIG. 4 further includes S407: The AS sends the first multicast service information to the PCF.

Further, for the second UE that is in the first cell and that has started to receive the data of the first service in the unicast mode before the AS determines to support sending the data of the first service in the multicast mode, the AS needs to notify the core network element that sending the data of the first service of the second UE in the multicast mode is supported. That is, the method procedure shown in FIG. 4 further includes S408: The AS sends a first message to the core network element. The first message notifies the core network element that the data of the first service can be sent in the multicast mode.

Specifically, for information included in the first message sent by the AS to the core network element, refer to the information that may be included in the first message shown in manner 1 to manner 4 that are listed in the embodiment shown in FIG. 3A and FIG. 3B. Details are not described herein again. It should be noted that when the first message includes the first multicast service information, step S407 may not need to be performed.

Correspondingly, the PCF updates, based on the first message received from the AS, a first PCC rule corresponding to the first service. For formulation of the first PCC rule, refer to step S307 in the embodiment shown in FIG. 3A and FIG. 3B. In addition, for information included in the first PCC rule, refer to the descriptions in step S308 in the embodiment shown in FIG. 3A and FIG. 3B. Details are not described herein again.

After an SMF receives an updated first PCC rule, it is different from the embodiment shown in FIG. 3A and FIG. 3B that, in this embodiment, step S309 does not need to be performed for the second UE, because a unicast resource corresponding to the data of the first service of the second UE has been created.

Further, after receiving the updated first PCC rule, the SMF may further send assistance information to an access network device. For details, refer to step S310 in the embodiment shown in FIG. 3A and FIG. 3B.

Alternatively, when the first message includes the first multicast service information, the PCF may further determine a second PCC rule based on the first multicast service information, and send the second PCC rule to an SMF. For details, refer to step S307 in the embodiment shown in FIG. 3A and FIG. 3B. After receiving an updated second PCC rule, the SMF may further create a multicast session of the first service and associate the second UE with the multicast session of the first service. That is, the method procedure shown in FIG. 4 further includes S409 in which the SMF creates the multicast session of the first service and S410 in which the SMF associates the second UE with the multicast session of the first service. For a specific procedure, refer to step S311 and step S312 in the embodiment shown in FIG. 3A and FIG. 3B. Details are not described herein again.

Further, the first message sent by the AS to the core network element in step S408 further includes information about the second UE. The information about the second UE may be an IP address of the second UE or an identifier of the second UE. Optionally, the information about the second UE may further include information such as a data network name (data network name, DNN) and a single network slice selection assistance information (single network slice selection assistance information, S-NSSAI) that correspond to a PDU session of the second UE. The PCF determines a corresponding SMF based on information about the first UE.

In a possible implementation, after the AS determines to support the multicast mode, the access network device may further determine, based on the received information, whether to support the multicast transmission mode of the data of the first service. The method procedure shown in FIG. 4 further includes S411: The access network device determines whether to support the multicast.

Further, the access network device determines whether to support sending the data of the first service to the UE in the multicast mode. For a specific determining manner, refer to the foregoing step S313. Details are not described herein again.

For example, when the access network device determines not to support sending the data of the first service to the first UE in the multicast mode, the access network device sends a sixth notification to the SMF corresponding to the first UE, where the sixth notification notifies that the data of the first service cannot be sent to the first UE in the multicast mode.

For example, when the access network device determines to send the data of the first service to the first UE in the multicast mode, the access network device sends a fifth notification to the SMF corresponding to the first UE, where the fifth notification notifies that the data of the first service can be sent to the first UE in the multicast mode.

After determining whether to support the multicast, the access network device may notify the SMF of a result via the fifth notification or the sixth notification. The method procedure shown in FIG. 4 further includes S412: The access network device sends the fifth notification or the sixth notification to the SMF.

After receiving the fifth notification or the sixth notification, the SMF sends a first notification or a second notification to the AS. The method procedure shown in FIG. 4 further includes S413: The SMF sends the first notification or the second notification to the AS.

When the first notification indicates that the data of the first service can be sent to the first UE in the multicast mode, the AS may send a third notification to the first UE, where the third notification indicates the first UE to receive the data of the first service in the multicast mode. Alternatively, when the second notification indicates that the data of the first service cannot be sent to the first UE in the multicast mode, the AS may send a fourth notification to the first UE, where the fourth notification indicates the first UE to receive the data of the first service in the unicast mode. The method procedure shown in FIG. 4 further includes S414: The AS sends the third notification or the fourth notification to the UE.

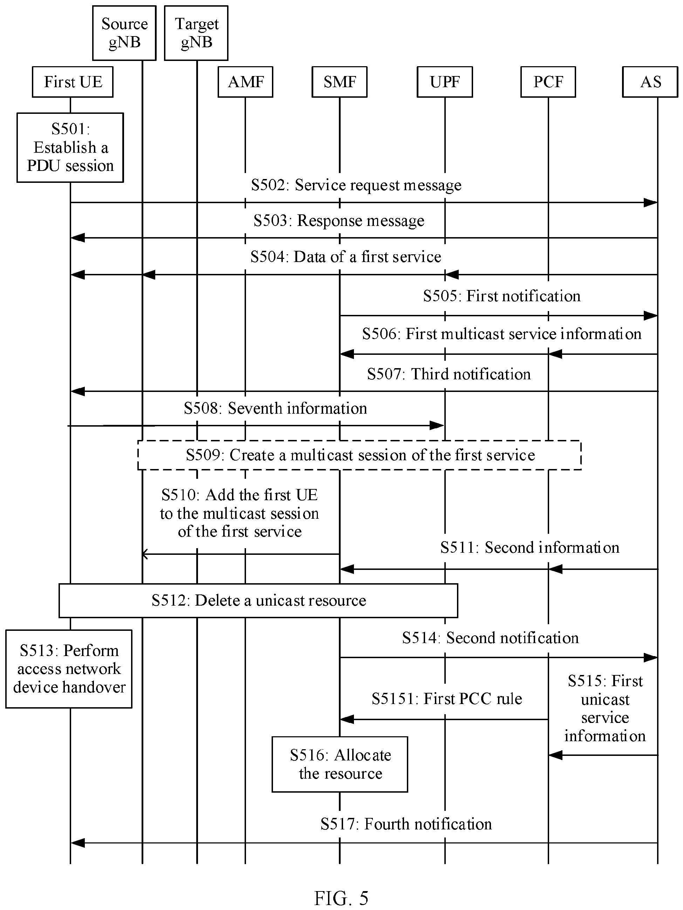

The foregoing describes, with reference to FIG. 3A to FIG. 4, a way to flexibly select different transmission modes for transmitting the data of the first service. The following describes, with reference to FIG. 5, a case in which a transmission mode of data of a service may need to be switched in a scenario of access network device handover occurring on UE. A scenario in which a multicast mode needs to be switched to a unicast mode for sending data of a first service is used as an example for description.

FIG. 5 is a schematic flowchart of still another data transmission method according to an embodiment of this application. The data transmission method includes at least some of the following steps.

S501: First user equipment establishes a PDU session.

This step is the same as step S301 in FIG. 3A, and details are not described herein again.

S502: The UE sends a service request message to an AS.

This step is the same as step S302 in FIG. 3A, and details are not described herein again.

S503: The AS sends a response message to the UE.

This step is the same as step S303 in FIG. 3A, and details are not described herein again.

S504: The AS sends the data of the first service to the UE.

This step is the same as step S304 in FIG. 3A, and details are not described herein again.

Further, the AS may subscribe to a first notification indicating that sending the data of the first service in the multicast mode is supported and a second notification indicating that sending the data of the first service in the multicast mode is not supported, so that when a mode for sending the data of the first service changes from not supporting the multicast mode to supporting the multicast mode, an SMF may send the first notification to the AS; or when a mode for sending the data of the first service changes from supporting the multicast mode to not supporting the multicast mode, an SMF may send the second notification to the AS.

In addition, when the AS subscribes to the first notification and the second notification for the first time, the SMF may immediately send, to the AS, the first notification indicating that sending the data of the first service in the multicast mode is supported or the second notification indicating that sending the data of the first service in the multicast mode is not supported.

For interaction signaling between the AS and the SMF in a specific subscription procedure, refer to the descriptions of step S306 in FIG. 3A. Details are not described herein again.

In this embodiment, an example in which a source access network device (a source gNB shown in FIG. 5) supports sending the data of the first service in the multicast mode, and a target access network device (a target gNB shown in FIG. 5) does not support sending the data of the first service in the multicast mode is used for description.

First, when the SMF determines that the data of the first service can be sent to the first UE in the multicast mode, the SMF sends the first notification to the AS, where the first notification notifies that the data of the first service is sent in the multicast mode. The method procedure shown in FIG. 5 further includes S505: The SMF sends the first notification to the AS.

In a possible implementation, the SMF may determine, based on a capability of the first UE and/or a capability of the source access network device, whether sending the data of the first service in the multicast mode is supported.

In another possible implementation, similar to steps S309 to S313 in FIG. 3A, the source access network device may determine whether to support sending the data of the first service in the multicast mode, and then send a fifth notification or a sixth notification to the SMF.

For example, the SMF notifies the source access network device of specific UEs that are receiving the data of the first service, so that the source access network device determines whether to support the multicast.

In addition, the SMF may further provide the source access network device with information about a second QoS flow corresponding to the first service and information about a first QoS flow corresponding to the first service, so that the source access network device performs determining. The information about the second QoS flow and the information about the first QoS flow may be obtained based on a PCC rule obtained from a PCF. For a specific procedure of generating and transmitting the information about the QoS flow, refer to steps S307 to S310 in FIG. 3A. Details are not described in this embodiment again.

Optionally, the SMF may first obtain the information about the second QoS flow corresponding to a multicast service identifier of the first service, and trigger creation of a multicast session of the first service. This is similar to step S311 shown in FIG. 3A, and details are not described herein again.

If the SMF has created the multicast session for the first service before the SMF sends the first notification to the AS, the first notification may further carry a multicast session identifier of the first service.

For example, in the foregoing procedure, if the AS has not sent first multicast service information corresponding to the first service to a core network device, the method procedure shown in FIG. 5 further includes S506: The AS sends the first multicast service information to the core network device.

Optionally, a message carrying the first multicast service information may include a UE list, to notify the core network device to add specific UEs to the multicast session. A transmission path of the first multicast service information includes: AS-PCF-SMF.

After receiving the first notification, the AS may indicate the first UE to receive the data of the first service in the multicast mode. The method procedure shown in FIG. 5 further includes S507: The AS sends a third notification to the first UE, where the third notification indicates the first UE to receive the data of the first service in the multicast mode.

In a possible implementation, the AS may further send multicast information of the first service to the first UE, for example, the multicast identifier of the first service or the multicast session identifier of the first service. In this implementation, after receiving the multicast information of the first service, the first UE sends a request for joining the multicast session. The method procedure shown in FIG. 5 further includes S508. The first UE sends, to the SMF, seventh information for joining the multicast session, where the seventh information carries the multicast identifier of the first service or the multicast session identifier of the first service.

The method procedure shown in FIG. 5 further includes S509 in which the SMF creates the multicast session of the first service and S510 in which the AS indicates an access network device to add the first UE to the multicast session of the first service. Multicast data of the first service is sent to the first UE in the multicast mode.

The method procedure shown in FIG. 5 further includes S511: The AS sends second information to the core network device, where the second information indicates to delete first unicast service information. This is similar to S318 in FIG. 3B, and details are not described herein again.

After receiving the second information, the SMF initiates deletion of a unicast resource corresponding to sending of the data of the first service in the unicast mode. The method procedure shown in FIG. 5 further includes S512: The SMF deletes the unicast resource. Specifically, in step S512, the SMF deletes a first QoS flow, a resource of a UPF, and a resource of the source access network device based on the second information.

In this embodiment, the source access network device supports sending the data of the first service in the multicast mode. After the data of the first service is transmitted in the multicast mode in the foregoing procedure, the first UE is handed over from the source access network device to the target access network device. The method procedure shown in FIG. 5 further includes S513: perform access network device handover. The target access network device does not support sending the data of the first service in the multicast mode.

For example, both the source access network device and the target access network device may be access network devices in a 5G network.

Alternatively, for example, the source access network device may be an access network device in a 5G network, and the target access network device may be an access network device in a 4G network. The target access network device in 4G does not support sending the multicast data of the first service in the multicast mode, and the source access network device in 5G supports sending the multicast data of the first service in the multicast mode.

After the access network device handover is performed, if the SMF determines, based on a capability of the target access network device, that the target access network device does not support sending the data of the first service in the multicast mode, the SMF needs to send the second notification to the AS, where the second notification notifies the AS that sending the multicast data of the first service in the multicast mode is not supported. That is, the method procedure shown in FIG. 5 further includes S514: The SMF sends the second notification to the AS. When the target access network device is an access network device in 4G, the SMF may determine, based on the fact that a target network is the 4G network, that sending the data of the first service in the multicast mode is not supported.

After the AS receives the second notification, if the SMF does not store the first unicast service information, the AS needs to send the first unicast service information to the PCF, and the PCF determines a first PCC rule based on the first unicast service information and sends the first PCC rule to the SMF, to switch the transmission mode of the data of the first service from the multicast mode to the unicast mode. That is, the method procedure shown in FIG. 5 further includes S515 in which the AS sends the first unicast service information to the PCF and S5151 in which the PCF network element sends the first PCC rule to the SMF.

After receiving the first PCC rule, the SMF may allocate the first QoS flow in the unicast mode to the first service. That is, the method procedure shown in FIG. 5 further includes S516: The SMF allocates the resource. For a specific resource allocation procedure, refer to step S309 in FIG. 3A. Details are not described herein again.

Correspondingly, the AS further sends a fourth notification to the first UE, where the fourth notification indicates the first UE to receive the data of the first service in the unicast mode. That is, the method procedure shown in FIG. 5 further includes S517: The AS sends the fourth notification to the first UE.

The source access network device shown in FIG. 5 supports sending the data of the first service in the multicast mode. However, after the access network device handover is performed, the multicast transmission mode is switched to the unicast transmission mode because the target access network device does not support sending the data of the first service in the multicast mode.

It should be understood that sequence numbers of the foregoing processes do not mean execution sequences in various embodiments of this application. The execution sequences of the processes should be determined based on functions and internal logic of the processes, but should not be construed as any limitation on the implementation processes in embodiments of this application.

In addition, the processes included in the schematic diagrams of the data transmission methods in FIG. 3A to FIG. 5 are not necessarily mandatory steps for implementing data transmission described in embodiments of this application. Some steps are optional, and some steps are mandatory. Specifically, refer to the detailed descriptions in FIG. 3A to FIG. 5.

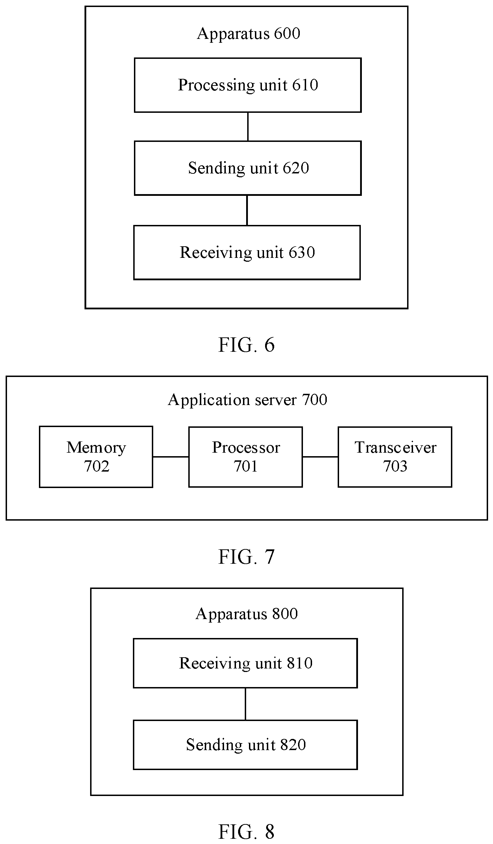

The foregoing describes in detail the data transmission methods in embodiments of this application with reference to FIG. 3A to FIG. 5. The following describes in detail data transmission apparatuses provided in embodiments of this application with reference to FIG. 6 to FIG. 13.

FIG. 6 is a schematic block diagram of a data transmission apparatus 600 according to an embodiment of this application. The data transmission apparatus includes a processing unit 610, a sending unit 620, and a receiving unit 630.

The sending unit 620 is configured to send a subscription request to a core network element, where the subscription request is for subscribing to a notification indicating whether sending data of a first service to first user equipment in a multicast mode is supported, and the data transmission apparatus 600 serves the first service.

The receiving unit 630 is configured to receive a first notification or a second notification from the core network element, where the first notification notifies that sending the data of the first service to the first user equipment in the multicast mode is supported, and the second notification notifies that sending the data of the first service to the first user equipment in the multicast mode is not supported.

The processing unit 610 is configured to: determine, based on the first notification, to send multicast data of the first service to the first user equipment in the multicast mode; or
determine, based on the second notification, to send unicast data of the first service to the first user equipment in a unicast mode.

The data transmission apparatus 600 corresponds to the application server in the method embodiments. The apparatus 600 may be the application server in the method embodiments, or a chip or a functional module inside the application server in the method embodiments. Corresponding units of the apparatus 600 are configured to perform corresponding steps performed by the application server in the method embodiments shown in FIG. 3A to FIG. 5.

The sending unit 620 in the apparatus 600 performs a sending step performed by the application server in the method embodiments.

The receiving unit 630 in the apparatus 600 is configured to perform a receiving step performed by the application server.

The processing unit 610 in the apparatus 600 is configured to perform a corresponding processing-related step in the application server.

The receiving unit 630 and the sending unit 620 may form a transceiver unit that has both receiving and sending functions. The processing unit 610 may be at least one processor. The sending unit 620 may be a transmitter or an interface circuit. The receiving unit 630 may be a receiver or an interface circuit. The receiver and the transmitter may be integrated together to form a transceiver or an interface circuit.

Optionally, the apparatus 600 may further include a storage unit, configured to store data and/or signaling. The processing unit 610, the sending unit 620, and the receiving unit 630 may interact with or be coupled to the storage unit. For example, the data and/or signaling in the storage unit are read or invoked, so that the method in the foregoing embodiments is performed.

The foregoing units may exist independently, or all or some of the units may be integrated.

FIG. 7 is a schematic diagram of a structure of an application server 700 applicable to an embodiment of this application. The application server 700 may be configured to implement a function of the application server in the data transmission method.

The application server 700 includes a processor 701, a memory 702, and a transceiver 703. The memory 702 stores instructions or a program. The processor 701 and the transceiver 703 are configured to execute or invoke the instructions or the program stored in the memory 702, to enable the application server 700 to implement the function of the application server in the data transmission method. When the instructions or the program stored in the memory 702 is executed, the transceiver 703 is configured to perform operations performed by the sending unit 620 and the receiving unit in the embodiment shown in FIG. 6, and the processor 702 is configured to perform an operation performed by the processing unit 630 in the embodiment shown in FIG. 6.

FIG. 8 is a schematic block diagram of another data transmission apparatus 800 according to an embodiment of this application. The data transmission apparatus includes a receiving unit 810 and a sending unit 820.

The receiving unit 810 is configured to receive a first message, where the first message includes first unicast service information and first multicast service information, the first unicast service information includes information about a first quality of service QoS requirement for sending data of a first service in a unicast mode and flow description information for describing unicast data of the first service, and the first multicast service information includes a multicast service identifier used for sending the data of the first service in a multicast mode.

The sending unit 820 is configured to send, to a session management network element, a first policy and charging control PCC rule used for sending the data of the first service in the unicast mode, where the first PCC rule includes the multicast service identifier.

The data transmission apparatus 800 corresponds to the policy control network element in the method embodiments. The apparatus 800 may be the policy control network element in the method embodiments, or a chip or a functional module inside the policy control network element in the method embodiments. Corresponding units of the apparatus 800 are configured to perform corresponding steps performed by the policy control network element in the method embodiments shown in FIG. 3A to FIG. 5.

The sending unit 820 in the apparatus 800 performs a sending step performed by the policy control network element in the method embodiments.

The receiving unit in the apparatus 800 is configured to perform a receiving step performed by the policy control network element in the method embodiments.

A processing unit 810 in the apparatus 800 is configured to perform a corresponding processing-related step in the policy control network element.

The receiving unit 810 and the sending unit 820 may form a transceiver unit that has both receiving and sending functions. The processing unit may be at least one processor. The sending unit 820 may be a transmitter or an interface circuit. The receiving unit 810 may be a receiver or an interface circuit. The receiver and the transmitter may be integrated together to form a transceiver or an interface circuit.

Optionally, the apparatus 800 may further include a storage unit, configured to store data and/or signaling. The processing unit, the sending unit 820, and the receiving unit 810 may interact with or be coupled to the storage unit. For example, the data and/or signaling in the storage unit are read or invoked, so that the method in the foregoing embodiments is performed.

The foregoing units may exist independently, or all or some of the units may be integrated.

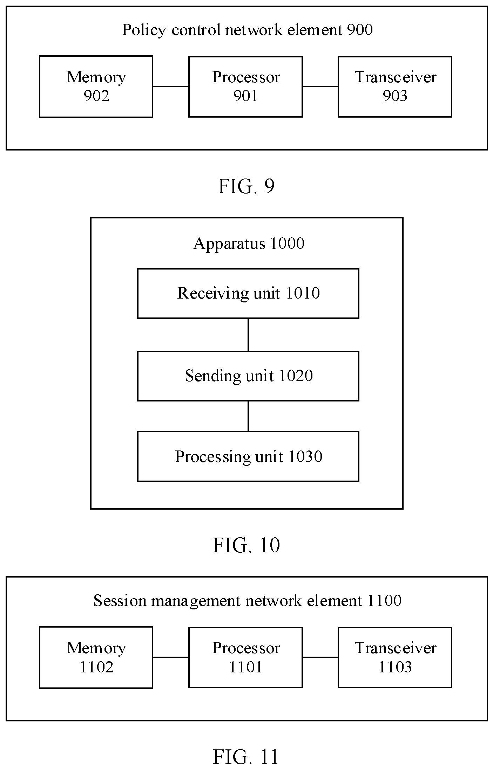

FIG. 9 is a schematic diagram of a structure of a policy control network element 900 applicable to an embodiment of this application. The policy control network element 900 may be configured to implement a function of the policy control network element in the data transmission method.

The policy control network element 900 includes a processor 901, a memory 902, and a transceiver 903. The memory 902 stores instructions or a program, and the processor 902 and the transceiver 903 are configured to execute or invoke the instructions or the program stored in the memory 902, to enable the policy control network element 900 to implement the function of the policy control network element in the data transmission method. When the instructions or the program stored in the memory 902 is executed, the transceiver 903 is configured to perform operations performed by the sending unit 820 and the receiving unit 810 in the embodiment shown in FIG. 8, and the processor 902 is configured to perform an operation performed by the processing unit in the embodiment shown in FIG. 8.

FIG. 10 is a schematic block diagram of still another data transmission apparatus 1000 according to an embodiment of this application. The data transmission apparatus includes a receiving unit 1010, a sending unit 1020, and a processing unit 1030.

The receiving unit 1010 is configured to receive a subscription request, where the subscription request is for subscribing to a notification indicating whether sending data of a first service to first user equipment in a multicast mode is supported, and an application server serves the first service.

The processing unit 1030 is configured to determine whether sending the data of the first service to the first user equipment in the multicast mode is supported.

The sending unit 1020 is configured to send a first notification or a second notification to the application server, where the first notification notifies that sending the data of the first service to the first user equipment in the multicast mode is supported, and the second notification notifies that sending the data of the first service to the first user equipment in the multicast mode is not supported.

The data transmission apparatus 1000 corresponds to the session management network element in the method embodiments. The apparatus 1000 may be the session management network element in the method embodiments, or a chip or a functional module inside the session management network element in the method embodiments. Corresponding units of the apparatus 1000 are configured to perform corresponding steps performed by the session management network element in the method embodiments shown in FIG. 3A to FIG. 5.

The sending unit 1020 in the apparatus 1000 performs a sending step performed by the session management network element in the method embodiments.

The receiving unit 1010 in the apparatus 1000 is configured to perform a receiving step performed by the session management network element.

A processing unit 1030 in the apparatus 1000 is configured to perform a corresponding processing-related step in the session management network element.

The receiving unit 1010 and the sending unit 1020 may form a transceiver unit that has both receiving and sending functions. The processing unit 1030 may be at least one processor. The sending unit 1020 may be a transmitter or an interface circuit. The receiving unit 1010 may be a receiver or an interface circuit. The receiver and the transmitter may be integrated together to form a transceiver or an interface circuit.

Optionally, the apparatus 1000 may further include a storage unit, configured to store data and/or signaling. The processing unit 1030, the sending unit 1020, and the receiving unit 1010 may interact with or be coupled to the storage unit. For example, the data and/or signaling in the storage unit are read or invoked, so that the method in the foregoing embodiments is performed.

The foregoing units may exist independently, or all or some of the units may be integrated.

FIG. 11 is a schematic diagram of a structure of a session management network element 1100 applicable to an embodiment of this application. The session management network element 1100 may be configured to implement a function of the session management network element in the data transmission method.

The session management network element 1100 includes a processor 1101, a memory 1102, and a transceiver 1103. The memory 1102 stores instructions or a program, and the processor 1102 and the transceiver 1103 are configured to execute or invoke the instructions or the program stored in the memory 1102, to enable the session management network element 1100 to implement the function of the session management network element in the data transmission method. When the instructions or the program stored in the memory 1102 is executed, the transceiver 1103 is configured to perform operations performed by the sending unit 1020 and the receiving unit 1010 in the embodiment shown in FIG. 10, and the processor 1102 is configured to perform an operation performed by the processing unit 1030 in the embodiment shown in FIG. 10.

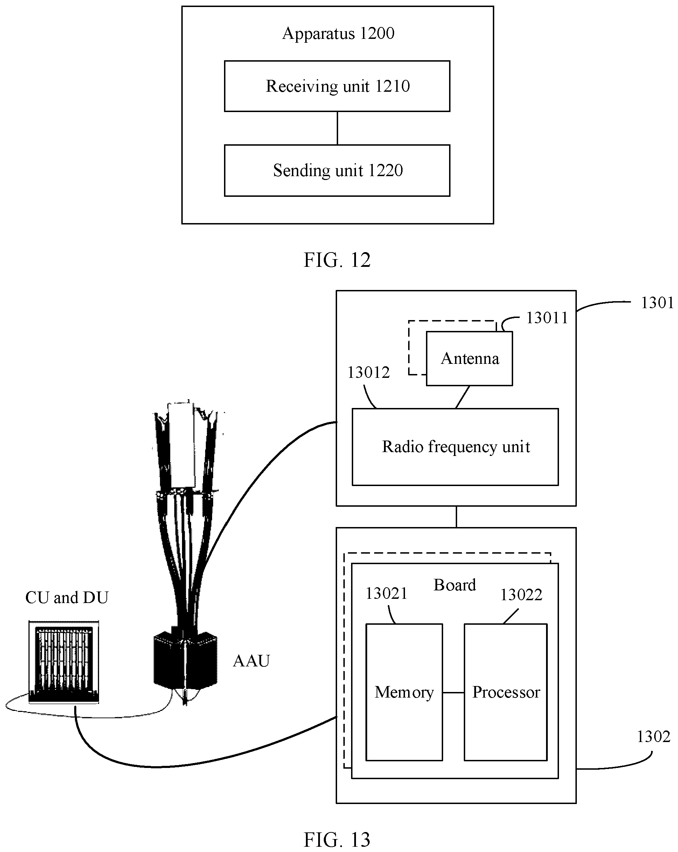

FIG. 12 is a schematic block diagram of yet another data transmission apparatus 1200 according to an embodiment of this application. The data transmission apparatus includes a receiving unit 1210 and a sending unit 1220.

The receiving unit 1210 is configured to receive fifth information from a session management network element, where the fifth information enables an access network device to send a fifth notification or a sixth notification to the session management network element.

The fifth notification notifies that the access network device supports sending data of a first service to first user equipment in a multicast mode, and the sixth notification notifies that the access network device does not support sending the data of the first service to the first user equipment in the multicast mode.

The sending unit 1220 is configured to send, for the access network device, the fifth notification to the session management network element in response to that the access network device determines to support sending the data of the first service to the first user equipment in the multicast mode.

Alternatively, the sending unit 1220 is configured to send, for the access network device, the sixth notification to the session management network element in response to that the access network device determines not to support sending the data of the first service to the first user equipment in the multicast mode.

The data transmission apparatus 1200 corresponds to the access network device in the method embodiments. The apparatus 1200 may be the access network device in the method embodiments, or a chip or a functional module inside the access network device in the method embodiments. Corresponding units of the apparatus 1200 are configured to perform corresponding steps performed by the access network device in the method embodiments shown in FIG. 3A to FIG. 5.

The sending unit 1220 in the apparatus 1200 performs a sending step performed by the access network device in the method embodiments.

The receiving unit in the apparatus 1200 is configured to perform a receiving step performed by the access network device.

A processing unit 1210 in the apparatus 1200 is configured to perform a corresponding processing-related step in the access network device.

The receiving unit 1210 and the sending unit 1220 may form a transceiver unit that has both receiving and sending functions. The processing unit may be at least one processor. The sending unit 1220 may be a transmitter or an interface circuit. The receiving unit 1210 may be a receiver or an interface circuit. The receiver and the transmitter may be integrated together to form a transceiver or an interface circuit.

Optionally, the apparatus 1200 may further include a storage unit, configured to store data and/or signaling. The processing unit, the sending unit 1220, and the receiving unit 1210 may interact with or be coupled to the storage unit. For example, the data and/or signaling in the storage unit are read or invoked, so that the method in the foregoing embodiments is performed.

The foregoing units may exist independently, or all or some of the units may be integrated.

FIG. 13 is a schematic diagram of a structure of an access network device 1300 applicable to an embodiment of this application. The access network device 1300 may be configured to implement a function of the access network device in the data transmission method. FIG. 13 may be a schematic diagram of a structure of the access network device.

In a possible manner, for example, in some implementation solutions in a 5G communication system, the access network device 1300 may include a CU, a DU, and an AAU. Compared with a case in which an access network device in an LTE communication system includes one or more radio frequency units, for example, a remote radio unit (remote radio unit, RRU) and one or more baseband units (baseband units, BBUs):
a non-real-time part of an original BBU is split and redefined as a CU, which is responsible for processing a non-real-time protocol and service, some physical layer processing functions of the BBU are combined into an AAU with an original RRU and a passive antenna, and remaining functions of the BBU are redefined as a DU, which is responsible for processing a physical layer protocol and a real-time service. In short, the CU and the DU are distinguished based on real-time performance of processed content, and the AAU is a combination of the RRU and the antenna.

The CU, the DU, and the AAU may be deployed separately or together. Therefore, there may be a plurality of network deployment forms. A possible deployment form is consistent with that of a conventional 4G access network device, in which the CU and the DU are deployed on same hardware. It should be understood that FIG. 13 is merely an example, and the protection scope of this application is not limited. For example, the deployment form may alternatively be that the DU is deployed in a 5G BBU equipment room, CUs or DUs are deployed together, or CUs are centralized at a higher level.

The AAU 1301 may implement a transceiver function, is referred to as a transceiver unit 1301, and corresponds to the sending unit 1220 in FIG. 12. Optionally, the transceiver unit 1301 may also be referred to as a transceiver, a transceiver circuit, or the like, and may include at least one antenna 13011 and a radio frequency unit 13012. Optionally, the transceiver unit 1301 may include a receiving unit and a sending unit. The receiving unit may correspond to a receiver (or referred to as a receiver circuit), and the sending unit may correspond to a transmitter (or referred to as a transmitter circuit). The CU and the DU 1302 may implement an internal processing function, and are referred to as a processing unit 1302. Optionally, the processing unit 1302 may control the access network device or the like, and may be referred to as a controller. The AAU 1301 and the CU and the DU 1302 may be physically disposed together, or may be physically disposed separately.

In addition, the access network device is not limited to the form shown in FIG. 13, and may alternatively be in another form. For example, the access network device includes the BBU and an ARU, includes the BBU and the AAU, may be a CPE, or may be in another form. This is not limited in this application.

It should be understood that the access network device 1300 shown in FIG. 13 can implement functions related to the access network device in the method embodiments in FIG. 3A to FIG. 5. Operations and/or functions of the units of the access network device 1300 are separately for implementing corresponding procedures performed by the access network device in the foregoing method embodiments of this application. To avoid repetition, detailed descriptions are appropriately omitted herein. The structure of the access network device shown in FIG. 13 is merely a possible form, but shall not constitute any limitation on embodiments of this application. According to this application, a possibility that an access network device structure in another form in the future is not excluded.

An embodiment of this application further provides a communication system, including the foregoing first user equipment, the access network device, the core network element, and the application server.

This application further provides a computer-readable storage medium. The computer-readable storage medium stores instructions. When the instructions are run on a computer, the computer is enabled to perform steps performed by the access network device in the methods shown in FIG. 3A to FIG. 5.

This application further provides a computer-readable storage medium. The computer-readable storage medium stores instructions. When the instructions are run on a computer, the computer is enabled to perform steps performed by the application server in the methods shown in FIG. 3A to FIG. 5.

This application further provides a computer-readable storage medium. The computer-readable storage medium stores instructions. When the instructions are run on a computer, the computer is enabled to perform steps performed by the policy control network element in the methods shown in FIG. 3A to FIG. 5.

This application further provides a computer-readable storage medium. The computer-readable storage medium stores instructions. When the instructions are run on a computer, the computer is enabled to perform steps performed by the session management network element in the methods shown in FIG. 3A to FIG. 5.

This application further provides a computer program product including instructions. When the computer program product runs on a computer, the computer is enabled to perform steps performed by the application server in the methods shown in FIG. 3A to FIG. 5.

This application further provides a computer program product including instructions. When the computer program product runs on a computer, the computer is enabled to perform steps performed by the access network device in the methods shown in FIG. 3A to FIG. 5.

This application further provides a computer program product including instructions. When the computer program product runs on a computer, the computer is enabled to perform steps performed by the policy control network element in the methods shown in FIG. 3A to FIG. 5.

This application further provides a computer program product including instructions. When the computer program product runs on a computer, the computer is enabled to perform steps performed by the session management network element in the methods shown in FIG. 3A to FIG. 5.

This application further provides a chip, including a processor. The processor is configured to read and run a computer program stored in a memory, to perform a corresponding operation and/or procedure performed by the application server in the data transmission method provided in this application. Optionally, the chip further includes the memory. The memory and the processor are connected to the memory through a circuit or a wire. The processor is configured to read and execute the computer program in the memory. Further, optionally, the chip further includes a communication interface, and the processor is connected to the communication interface. The communication interface is configured to receive data and/or information that need/needs to be processed. The processor obtains the data and/or information from the communication interface, and processes the data and/or information. The communication interface may be an input/output interface, an interface circuit, an output circuit, an input circuit, a pin, a related circuit, or the like in the chip. The processor may alternatively be embodied as a processing circuit or a logic circuit.

This application further provides a chip, including a processor. The processor is configured to read and run a computer program stored in a memory, to perform a corresponding operation and/or procedure performed by the access network device in the data transmission method provided in this application. Optionally, the chip further includes the memory. The memory and the processor are connected to the memory through a circuit or a wire. The processor is configured to read and execute the computer program in the memory. Further, optionally, the chip further includes a communication interface, and the processor is connected to the communication interface. The communication interface is configured to receive data and/or information that need/needs to be processed. The processor obtains the data and/or information from the communication interface, and processes the data and/or information. The communication interface may be an input/output interface, an interface circuit, an output circuit, an input circuit, a pin, a related circuit, or the like in the chip. The processor may alternatively be embodied as a processing circuit or a logic circuit.

This application further provides a chip, including a processor. The processor is configured to read and run a computer program stored in a memory, to perform a corresponding operation and/or procedure performed by the policy control network element in the data transmission method provided in this application. Optionally, the chip further includes the memory. The memory and the processor are connected to the memory through a circuit or a wire. The processor is configured to read and execute the computer program in the memory. Further, optionally, the chip further includes a communication interface, and the processor is connected to the communication interface. The communication interface is configured to receive data and/or information that need/needs to be processed. The processor obtains the data and/or information from the communication interface, and processes the data and/or information. The communication interface may be an input/output interface, an interface circuit, an output circuit, an input circuit, a pin, a related circuit, or the like in the chip. The processor may alternatively be embodied as a processing circuit or a logic circuit.

This application further provides a chip, including a processor. The processor is configured to read and run a computer program stored in a memory, to perform a corresponding operation and/or procedure performed by the session management network element in the data transmission method provided in this application. Optionally, the chip further includes the memory. The memory and the processor are connected to the memory through a circuit or a wire. The processor is configured to read and execute the computer program in the memory. Further, optionally, the chip further includes a communication interface, and the processor is connected to the communication interface. The communication interface is configured to receive data and/or information that need/needs to be processed. The processor obtains the data and/or information from the communication interface, and processes the data and/or information. The communication interface may be an input/output interface, an interface circuit, an output circuit, an input circuit, a pin, a related circuit, or the like in the chip. The processor may alternatively be embodied as a processing circuit or a logic circuit.

The foregoing chip may alternatively be replaced with a chip system. Details are not described herein again.

In this application, terms such as "include", "have", and any variations thereof are intended to cover non-exclusive inclusions, for example, a process, method, system, product, or device that includes a series of steps or units is not necessarily limited to those clearly listed steps or units, but may include other steps or units that are not clearly listed or inherent to such a process, method, product, or device.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

In addition, the term "and/or" in this application describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects. The term "at least one" in this application may indicate "one" and "two or more". For example, at least one of A, B, and C may indicate the following seven cases: Only A exists, only B exists, only C exists, both A and B exist, both A and C exist, both C and B exist, and A, B, and C exist.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method, comprising:
sending, by an application server, a subscription request to a core network element, wherein the subscription request is for subscribing to a notification indicating whether sending data of a first service to first user equipment in a multicast mode is supported, and the application server serves the first service;
receiving, by the application server, a first notification or a second notification, wherein the first notification notifies that sending the data of the first service to the first user equipment in the multicast mode is supported, and the second notification notifies that sending the data of the first service to the first user equipment in the multicast mode is not supported; and
determining, by the application server based on the first notification, to send multicast data of the first service to the first user equipment in the multicast mode; or
determining, by the application server based on the second notification, to send unicast data of the first service to the first user equipment in a unicast mode.

2. The method according to claim 1, wherein the method further comprises:
determining, by the application server, a first cell accessed by the first user equipment and a quantity of user equipments in the first cell that receive the data of the first service, wherein the quantity of user equipments in the first cell that receive the data of the first service is for determining whether to send the data of the first service in the multicast mode.

3. The method according to claim 1 or 2, wherein the method further comprises:
sending, by the application server, first unicast service information and first multicast service information to the core network element, wherein the first multicast service information comprises a multicast service identifier used for sending the data of the first service in the multicast mode, and the first unicast service information comprises information about a first quality of service QoS requirement for sending the data of the first service in the unicast mode and flow description information for describing the unicast data of the first service.

4. The method according to claim 3, wherein the sending, by the application server, the subscription request, the first unicast service information, and the first multicast service information to the core network element comprises:
sending, by the application server, a first message to the core network element, wherein the first message comprises the subscription request, the first unicast service information, and the first multicast service information.

5. The method according to claim 3 or 4, wherein the first multicast service information further comprises:
information about a second QoS requirement for sending the data of the first service in the multicast mode.

6. The method according to any one of claims 1 to 5, wherein when the application server determines to send the multicast data of the first service to the first user equipment in the multicast mode, the method further comprises:
sending, by the application server, a third notification to the first user equipment; and/or
sending, by the application server, first information to the core network element, wherein
the third notification indicates the first user equipment to receive the data of the first service in the multicast mode, and the first information indicates to send the data of the first service to the first user equipment in the multicast mode.

7. The method according to claim 6, wherein the method further comprises:
sending, by the application server, second information to the core network element, wherein the second information indicates to delete the first unicast service information; or
the second information indicates to stop sending the data of the first service to the first user equipment in the unicast mode, wherein the first unicast service information comprises the information about the first QoS requirement for sending the data of the first service in the unicast mode.

8. The method according to any one of claims 1 to 5, wherein when the application server determines to send the unicast data of the first service to the first user equipment in the unicast mode, the method further comprises:
sending, by the application server, a fourth notification to the first user equipment, wherein the fourth notification indicates the first user equipment to receive the data of the first service in the unicast mode.

9. The method according to any one of claims 1 to 5 and 8, wherein the method further comprises:
sending, by the application server, the first unicast service information to the core network element, wherein the first unicast service information is for allocating a resource for sending the data of the first service to the first user equipment in the unicast mode; or
sending, by the application server, third information to the core network element, wherein the third information indicates to send the data of the first service to the first user equipment in the unicast mode.

10. The method according to any one of claims 1 to 9, wherein the subscription request comprises assistance information, and the assistance information is for assisting in determining whether to send the data of the first service to the first user equipment in the multicast mode.

11. The method according to any one of claims 1 to 10, wherein the method further comprises:
sending, by the application server, multicast information of the first service to the first user equipment, wherein the multicast information of the first service comprises multicast address information.

12. A data transmission method, comprising:
receiving, by a policy control network element, a first message, wherein the first message comprises first unicast service information and first multicast service information, the first unicast service information comprises information about a first quality of service QoS requirement for sending data of a first service in a unicast mode and flow description information for describing unicast data of the first service, and the first multicast service information comprises a multicast service identifier used for sending the data of the first service in a multicast mode; and
sending, by the policy control network element to a session management network element, a first policy and charging control PCC rule used for sending the data of the first service in the unicast mode, wherein the first PCC rule comprises the multicast service identifier.

13. The method according to claim 12, wherein the first message further comprises a subscription request, the subscription request is for subscribing to a notification indicating whether sending the data of the first service to first user equipment in the multicast mode is supported, and the first PCC rule comprises the subscription request.

14. The method according to claim 12 or 13, wherein the first multicast service information further comprises information about a second QoS requirement for sending the data of the first service in the multicast mode.

15. A data transmission method, comprising:
receiving, by a session management network element, a subscription request, wherein the subscription request is for subscribing to a notification indicating whether sending data of a first service to first user equipment in a multicast mode is supported, and an application server serves the first service;
determining, by the session management network element, whether sending the data of the first service to the first user equipment in the multicast mode is supported; and
sending, by the session management network element, a first notification or a second notification to the application server, wherein the first notification notifies that sending the data of the first service to the first user equipment in the multicast mode is supported, and the second notification notifies that sending the data of the first service to the first user equipment in the multicast mode is not supported.

16. The method according to claim 15, wherein the determining, by the session management network element, whether sending the data of the first service to the first user equipment in the multicast mode is supported comprises:
determining, by the session management network element, whether an access network device supports sending the data of the first service to the first user equipment in the multicast mode, wherein the first user equipment accesses a network through the access network device; and/or
determining, by the session management network element, whether the first user equipment supports receiving the data of the first service in the multicast mode.

17. The method according to claim 15 or 16, wherein the method further comprises:
obtaining, by the session management network element, assistance information, wherein the assistance information is for assisting in determining whether to send the data of the first service to the first user equipment in the multicast mode; and
sending, by the session management network element, the assistance information to the access network device.

18. The method according to claim 17, wherein the assistance information comprises one or more of the following information: a bandwidth required for sending the data of the first service in the multicast mode, a bandwidth required for sending the data of the first service in a unicast mode, a first quality of service QoS requirement for sending the data of the first service in the unicast mode, and a second QoS requirement for sending the data of the first service in the multicast mode.

19. The method according to claim 17 or 18, wherein
the subscription request comprises the assistance information.

20. The method according to claim 17 or 18, wherein the method further comprises:
receiving, by the session management network element, the information about the first QoS requirement and/or the information about the second QoS requirement from a policy control network element.

21. The method according to any one of claims 15 to 20, wherein the method further comprises:
sending, by the session management network element, fourth information to the access network device, wherein the fourth information indicates the access network device to send the data of the first service in a point-to-multipoint PTM mode.

22. The method according to any one of claims 15 to 21, wherein the method further comprises:
receiving, by the session management network element, a fifth notification from the access network device, wherein the fifth notification notifies that the access network device supports sending the data of the first service to the first user equipment in the multicast mode; and
the determining, by the session management network element, whether sending the data of the first service to the first user equipment in the multicast mode is supported comprises:
determining, by the session management network element based on the fifth notification, that sending the data of the first service to the first user equipment in the multicast mode is supported.

23. The method according to any one of claims 15 to 22, wherein the method further comprises:
receiving, by the session management network element, a sixth notification from the access network device, wherein the sixth notification notifies that the access network device does not support sending the data of the first service to the first user equipment in the multicast mode; and
the determining, by the session management network element, whether sending the data of the first service to the first user equipment in the multicast mode is supported comprises:
determining, by the session management network element based on the sixth notification, that sending the data of the first service to the first user equipment in the multicast mode is not supported.

24. The method according to any one of claims 15 to 23, wherein the method further comprises:
sending, by the session management network element, fifth information to the access network device, wherein the fifth information enables the access network device to send the fifth notification or the sixth notification to the session management network element, wherein
the fifth notification notifies that sending the data of the first service in the multicast mode is supported, and the sixth notification notifies that sending the data of the first service in the multicast mode is not supported.

25. The method according to any one of claims 15 to 24, wherein the method further comprises:
receiving, by the session management network element, first information; or
receiving, by the session management network element, seventh information from the first user equipment, wherein the first information and the seventh information indicate to send the data of the first service to the first user equipment in the multicast mode; and
sending, by the session management network element, eighth information to the access network device, wherein the eighth information indicates the access network device to send the data of the first service to the first user equipment in the multicast mode.

26. A data transmission method, comprising:
receiving, by an access network device, fifth information from a session management network element, wherein the fifth information enables the access network device to send a fifth notification or a sixth notification to the session management network element, wherein
the fifth notification notifies that the access network device supports sending data of a first service to first user equipment in a multicast mode, and the sixth notification notifies that the access network device does not support sending the data of the first service to the first user equipment in the multicast mode; and
when the access network device determines to support sending the data of the first service to the first user equipment in the multicast mode, sending, by the access network device, the fifth notification to the session management network element; or
when the access network device determines not to support sending the data of the first service to the first user equipment in the multicast mode, sending, by the access network device, the sixth notification to the session management network element.

27. The method according to claim 26, wherein the method further comprises:
obtaining, by the access network device, assistance information, wherein the assistance information is for assisting in determining whether to send the data of the first service in the multicast mode.

28. The method according to claim 26 or 27, wherein the method further comprises:
receiving, by the access network device, fourth information from the session management network element, wherein the fourth information indicates the access network device to send the data of the first service in a point-to-multipoint PTM mode.

29. The method according to any one of claims 25 to 28, wherein the method further comprises:
receiving, by the access network device, eighth information from the session management network element, wherein the eighth information indicates the access network device to send the data of the first service to the first user equipment in the multicast mode.

30. A data transmission apparatus, configured to perform the method according to any one of claims 1 to 11.

31. A data transmission apparatus, configured to perform the method according to any one of claims 12 to 14.

32. A data transmission apparatus, configured to perform the method according to any one of claims 15 to 25.

33. A data transmission apparatus, configured to perform the method according to any one of claims 26 to 29.

34. A computer-readable storage medium, comprising computer instructions, wherein when the computer instructions are run by a processor, a computer is enabled to perform the method according to any one of claims 1 to 11, the method according to any one of claims 12 to 14, the method according to any one of claims 15 to 25, or the method according to any one of claims 26 to 29.

35. A chip apparatus, comprising a processing circuit, wherein the processing circuit is configured to invoke a program from a memory and run the program, to enable a communication device on which the chip apparatus is installed to perform the method according to any one of claims 1 to 11, the method according to any one of claims 12 to 14, the method according to any one of claims 15 to 25, or the method according to any one of claims 26 to 29.
